# EUROPEAN PATENT APPLICATION

(11) **EP 4 503 786 A1**
(43) Date of publication of application: **05.02.2025**
(21) Application number: 23777813.9
(22) Date of filing: 13.03.2023
(51) Int. Cl.: H04W 64/00

(54) **INFORMATION OBTAINING METHOD AND APPARATUS OF POSITIONING REFERENCE UNIT, AND COMMUNICATION DEVICE**

(30) Priority: 28.03.2022 CN 202210314289
(71) Applicant: Datang Mobile Communications Equipment Co., Ltd., Beijing 100085 (CN)
(72) Inventor: HOU, Yunjing, Beijing 100085 (CN); AI, Ming, Beijing 100085 (CN)
(74) Representative: Studio Torta S.p.A.
(86) International application number: PCT/CN2023/081084
(87) International publication number: WO 2023/185436

(57) **Abstract**

This application provides a method and a device for obtaining information of a positioning reference unit, and a communication device. The method includes: obtaining, by a first LMF, positioning reference unit (PRU) information; and performing, by the first LMF, first processing according to the PRU information, wherein the first processing comprises at least one of the following: storing the PRU information; transmitting the PRU information to a first network function; determining location information of a UE according to the PRU information.

## Description

### CROSS-REFERENCE TO RELATED APPLICATIONS

This application claims a priority to Chinese Patent Application No. 202210314289.9 filed in China on March 28, 2022, the entire contents of which are incorporated herein by reference.

### TECHNICAL FIELD

The present disclosure relates to the field of communication technology, and in particular to a method and a device for obtaining information of a positioning reference unit, and a communication device.

### BACKGROUND

A positioning reference unit (Positioning Reference Unit, PRU) is a device whose position is known in advance or can be accurately measured. The type of the device may be a user equipment (User Equipment, UE) or a base station. The positioning reference unit may be used to assist a network in positioning multiple UEs or all UEs, and may be used to improve the positioning accuracy. In related technologies, PRU information is stored in a location management function (Location Management Function, LMF) or access and mobility management function (Access and Mobility Management Function, AMF), and other LMFs or network elements cannot obtain the PRU information, which reduces the usage efficiency of PRU.

### SUMMARY

The present disclosure is to provide a method and a device for obtaining information of a positioning reference unit (PRU), and a communication device, so as to solve a problem of low usage efficiency of PRU in related technologies.

An embodiment of the present disclosure provides a method for obtaining information of a PRU, which is applied to an LMF. The method includes:
obtaining, by a first LMF, PRU information; and
performing, by the first LMF, first processing according to the PRU information, where the first processing includes at least one of the following:
   storing the PRU information;
   transmitting the PRU information to a first network function;
   determining location information of a UE according to the PRU information.

Optionally, the obtaining the PRU information includes at least one of the following:
receiving first PRU information transmitted by an AMF;
performing positioning on the PRU to obtain second PRU information;
receiving third PRU information transmitted by a second LMF;
receiving fourth PRU information transmitted by the PRU.

Optionally, the performing positioning on the PRU to obtain the second PRU information includes:
receiving a first request message transmitted by the AMF, where the first request message includes PRU indication information; and
performing positioning on the PRU based on the PRU indication information to obtain the second PRU information.

Optionally, the transmitting the PRU information to the first network function includes at least one of the following:
transmitting the PRU information to a target network function;
transmitting the PRU information to a second LMF.

Optionally, the transmitting the PRU information to the target network function includes: transmitting a second request message to the target network function, where the second request message includes the PRU information.

Optionally, the determining the location information of the UE according to the PRU information includes:
obtaining measurement information and/or location information of the PRU according to the PRU information; and
determining the location information of the UE based on the measurement information and/or the location information of the PRU.

Optionally, before obtaining the measurement information and/or the location information of the PRU, the method also includes:
transmitting a third request message to the first network function; and
receiving a first response message transmitted by the first network function, where the first response message includes the PRU information.

Optionally, the obtaining the measurement information and/or the location information of the PRU according to the PRU information includes one of the following:
performing positioning on the PRU according to the PRU information to obtain the measurement information and/or the location information of the PRU;
obtaining the measurement information and/or the location information of the PRU through a second LMF;
obtaining the measurement and/or the location information of the PRU through the first network function.

Optionally, the obtaining the measurement information and/or the location information of the PRU through the second LMF includes:
transmitting a fourth request message to the second LMF; and
receiving a second response message transmitted by the second LMF, where the second response message includes the measurement information and/or the location information of the PRU.

Optionally, the obtaining the measurement information and/or the location information of the PRU through the first network function includes:
transmitting a fifth request message to the first network function; and
receiving a third response message transmitted by the first network function, where the third response message includes the measurement information and/or the location information of the PRU.

Optionally, the PRU information includes at least one of the following: an identity of the PRU, a serving area of the PRU, information of a serving AMF of the PRU, a serving cell of the PRU, a power of the PRU, a load of the PRU, a status of the PRU, LCS correlation identity, information of a serving LMF of the PRU, location information of the PRU, measurement information of the PRU.

An embodiment of the present disclosure provides a method for obtaining information of a PRU, which is applied to a first network function, and includes:
obtaining, by the first network function, PRU information; and
storing, by the first network function, the PRU information.

Optionally, the PRU information includes at least one of the following:
first PRU information provided by an AMF;
second PRU information obtained by locating the PRU by a first LMF;
third PRU information transmitted by a second LMF;
fourth PRU message transmitted by the PRU.

Optionally, the obtaining the PRU information includes: receiving a second request message transmitted by the first LMF, where the second request message includes the PRU information.

Optionally, the method further includes:
receiving a third request message transmitted by the first LMF; and
transmitting a first response message to the first LMF, where the first response message includes the PRU information.

Optionally, the method further includes:
receiving a fifth request message transmitted by a first LMF;
transmitting a sixth request message to a second LMF;
receiving a fourth response message transmitted by the second LMF, where the fourth response message includes measurement information and/or location information of the PRU; and
transmitting a third response message to the first LMF according to the fourth response message, where the third response message includes the measurement information and/or the location information of the PRU.

Optionally, the PRU information includes at least one of the following: an identity of the PRU, a serving area of the PRU, information of a serving AMF of the PRU, a serving cell of the PRU, a power of the PRU, a load of the PRU, a status of the PRU, LCS correlation identity, information of a serving LMF of the PRU, location information of the PRU, measurement information of the PRU.

An embodiment of the present disclosure provides an information registration method for a PRU, which includes: transmitting, by the PRU, PRU information.

Optionally, the transmitting, by the PRU, the PRU information includes at least one of the following:
transmitting the PRU information to a first LMF; and
transmitting the PRU information to a first network function.

Optionally, the transmitting the PRU information to the first network function includes: transmitting the PRU information to the first network function through an AMF; or, transmitting the PRU information to the first network function through an AMF and the first LMF.

An embodiment of the present disclosure provides a communication device, including: a memory, a transceiver and a processor. The memory is configured to store a computer program; the transceiver is configured to transmit and receive data under the control of the processor; the processor is configured to read the computer program from the memory and perform the following operations:
obtaining positioning reference unit (PRU) information; and
performing first processing according to the PRU information, where the first processing includes at least one of the following:
   storing the PRU information;
   transmitting the PRU information to a first network function;
   determining location information of a UE according to the PRU information.

Optionally, the PRU information includes PRU information about another LMF in addition to the first LMF.

Optionally, the processor is configured to read the computer program from the memory and perform at least one of the following operations:
receiving first PRU information transmitted by an AMF;
performing positioning on the PRU to obtain second PRU information;
receiving third PRU information transmitted by a second LMF;
receiving fourth PRU information transmitted by the PRU.

Optionally, the processor is configured to read the computer program from the memory and perform the following operations:
receiving a first request message transmitted by the AMF, where the first request message includes PRU indication information; and
performing positioning on the PRU based on the PRU indication information to obtain the second PRU information.

Optionally, the transceiver is configured to perform at least one of the following operations:
transmitting the PRU information to a target network function;
transmitting the PRU information to a second LMF.

Optionally, the transceiver is specifically configured to: transmit a second request message to the target network function, where the second request message includes the PRU information.

Optionally, the processor is configured to read the computer program from the memory and perform the following operations:
obtaining measurement information and/or location information of the PRU according to the PRU information; and
determining the location information of the UE based on the measurement information and/or the location information of the PRU.

Optionally, the transceiver is further configured to:
transmitting a third request message to the first network function; and
receiving a first response message transmitted by the first network function, where the first response message includes the PRU information.

Optionally, the processor is configured to read the computer program from the memory and perform one of the following operations:
performing positioning on the PRU according to the PRU information to obtain the measurement information and/or the location information of the PRU;
obtaining the measurement information and/or the location information of the PRU through a second LMF;
obtaining the measurement and/or the location information of the PRU through the first network function.

Optionally, the transceiver is further configured to:
transmitting a fourth request message to the second LMF; and
receiving a second response message transmitted by the second LMF, where the second response message includes the measurement information and/or the location information of the PRU.

Optionally, the transceiver is further configured to:
transmitting a fifth request message to the first network function; and
receiving a third response message transmitted by the first network function, where the third response message includes the measurement information and/or the location information of the PRU.

Optionally, the PRU information includes at least one of the following: an identity of the PRU, a serving area of the PRU, information of a serving AMF of the PRU, a serving cell of the PRU, a power of the PRU, a load of the PRU, a status of the PRU, LCS correlation identity, information of a serving LMF of the PRU, location information of the PRU, measurement information of the PRU.

An embodiment of the present disclosure provides a communication device, including: a memory, a transceiver and a processor. The memory is configured to store a computer program; the transceiver is configured to transmit and receive data under the control of the processor; the processor is configured to read the computer program from the memory and perform the following operations:
obtaining PRU information; and
storing the PRU information.

Optionally, the PRU information includes at least one of the following:
first PRU information provided by an AMF;
second PRU information obtained by locating the PRU by a first LMF;
third PRU information transmitted by a second LMF;
fourth PRU message transmitted by the PRU.

Optionally, the transceiver is configured to: receive a second request message transmitted by the first LMF, where the second request message includes the PRU information.

Optionally, the transceiver is further configured to:
receive a third request message transmitted by the first LMF; and
transmit a first response message to the first LMF, where the first response message includes the PRU information.

Optionally, the transceiver is further configured to:
receive a fifth request message transmitted by a first LMF;
transmit a sixth request message to a second LMF;
receive a fourth response message transmitted by the second LMF, where the fourth response message includes measurement information and/or location information of the PRU; and
transmit a third response message to the first LMF according to the fourth response message, where the third response message includes the measurement information and/or the location information of the PRU.

Optionally, the PRU information includes at least one of the following: an identity of the PRU, a serving area of the PRU, information of a serving AMF of the PRU, a serving cell of the PRU, a power of the PRU, a load of the PRU, a status of the PRU, LCS correlation identity, information of a serving LMF of the PRU, location information of the PRU, measurement information of the PRU.

An embodiment of the present disclosure provides a communication device, including: a memory, a transceiver and a processor. The memory is configured to store a computer program; the transceiver is configured to transmit and receive data under the control of the processor; the processor is configured to read the computer program from the memory and perform the following operations: transmitting PRU information.

Optionally, the transceiver is specifically configured to perform at least one of the following operations:
transmitting the PRU information to a first LMF; and
transmitting the PRU information to a first network function.

Optionally, the transceiver is specifically configured to: transmit the PRU information to the first network function through an AMF; or, transmit the PRU information to the first network function through an AMF and the first LMF.

An embodiment of the present disclosure provides a device for obtaining information of a positioning reference unit, including:
a first obtaining unit, configured to obtain positioning reference unit (PRU) information; and
a first processing unit, configured to perform first processing according to the PRU information, where the first processing includes at least one of the following:
   storing the PRU information;
   transmitting the PRU information to a first network function;
   determining location information of a UE according to the PRU information.

An embodiment of the present disclosure provides a device for obtaining information of a positioning reference unit, including:
a second obtaining unit, configured to obtain PRU information; and
a first storage unit, configured to store the PRU information.

An embodiment of the present disclosure provides a device for obtaining information of a positioning reference unit, including: a first transmitting unit, configured to transmit PRU information.

An embodiment of the present disclosure provides a processor readable storage medium, storing a computer program, where the computer program is executed by a processor to implement steps of the above method for registering information of the PRU, and implement steps of the above method for obtaining information of the PRU.

The above technical solutions of the present disclosure have the following beneficial effects. In the embodiments of the present application, after the LMF obtains the PRU information, the LMF can perform processing such as storing the PRU information, transmitting the PRU information to the first network function, and obtaining the location of the UE according to the PRU information. The first LMF stores the PRU information, and/or reports the PRU information to the first network function, so that other network elements can obtain the PRU information from the first LMF and/or the first network function, thereby improving the usage efficiency of PRU. The first LMF or other network elements can locate the UE according to the obtained PRU information, so as to realize positioning of multiple UEs by using the PRU information.

### BRIEF DESCRIPTION OF THE DRAWINGS

FIG. 1 shows a schematic diagram of a location service architecture;
FIG. 2 shows a first schematic flow chart of a method for obtaining information of a positioning reference unit according to an embodiment of the present disclosure;
FIG. 3 shows a second schematic flow chart of a method for obtaining information of a positioning reference unit according to an embodiment of the present disclosure;
FIG. 4 shows a third schematic flow chart of a method for obtaining information of a positioning reference unit according to an embodiment of the present disclosure;
FIG. 5 shows a first flow chart of information registration by PRU according to an embodiment of the present disclosure;
FIG. 6 shows a first schematic flow chart of a first LMF positioning a UE according to an embodiment of the present disclosure;
FIG. 7 shows a second schematic flow chart of a first LMF positioning a UE according to an embodiment of the present disclosure;
FIG. 8 shows a third schematic flow chart of a first LMF positioning a UE according to an embodiment of the present disclosure;
FIG. 9 shows a fourth schematic flow chart of a first LMF positioning a UE according to an embodiment of the present disclosure;
FIG. 10 shows a second schematic flow chart of information registration by PRU according to an embodiment of the present disclosure;
FIG. 11 shows a third schematic flow chart of information registration by PRU according to an embodiment of the present disclosure;
FIG. 12 shows a fifth schematic flow chart of an LMF positioning a UE according to an embodiment of the present disclosure;
FIG. 13 shows a fourth schematic flow chart of information registration by PRU according to an embodiment of the present disclosure;
FIG. 14 shows a sixth schematic flow chart of an LMF positioning a UE according to an embodiment of the present disclosure;
FIG. 15 shows a seventh schematic flow chart of a method for obtaining information of a positioning reference unit according to an embodiment of the present disclosure;
FIG. 16 shows a first schematic structural diagram of a device for obtaining information of a positioning reference unit according to an embodiment of the present disclosure;
FIG. 17 shows a second schematic structural diagram of a device for obtaining information of a positioning reference unit according to an embodiment of the present disclosure;
FIG. 18 shows a first schematic structural diagram of a communication device according to an embodiment of the present disclosure; and
FIG. 19 shows a second schematic structural diagram of a communication device according to an embodiment of the present disclosure.

### DETAILED DESCRIPTION

In order to make a to-be-solved technical problem, a technical solution and advantages of the present disclosure clearer, a detailed description will be given below in conjunction with the accompanying drawings and specific embodiments. In the following description, specific details such as specific configurations and components are provided merely to assist in a comprehensive understanding of the embodiments of the present disclosure. Therefore, those skilled in the art should be appreciated that various changes and modifications can be made to the embodiments described herein without departing from the scope and spirit of the present disclosure. In addition, for clarity and conciseness, descriptions of known functions and constructions have been omitted.

It should be appreciated that "an embodiment" or "one embodiment" mentioned throughout the specification means that specific features, structures, or characteristics related to the embodiment are included in at least one embodiment of the present disclosure. Therefore, words "in an embodiment" or "in one embodiment" appearing throughout the entire specification may not necessarily refer to the same embodiment. In addition, these specific features, structures, or characteristics can be combined in one or more embodiments in any suitable manner.

In various embodiments of the present disclosure, it should be appreciated that the size of a sequence number of each of the following processes does not imply the order of execution, and the execution order of each process should be determined based on the function and internal logic of the each process, which should not constitute any limitations on the implementation process of the present disclosure.

The term "and/or" in the embodiments of the present disclosure describes an association relationship of associated objects, indicating that there may be three types of relationships. For example, A and/or B, which can represent three situations of A alone, both A and B, and B alone. The character "/" generally indicates that the associated objects before and after the character is in an "or" relationship.

The term "multiple" in the embodiments of the present disclosure refers to two or more, and other quantifiers are similar thereto.

The technical solution of embodiments of the present disclosure will be clearly and completely described hereinafter in conjunction with the accompanying drawings. Apparently, the described embodiments merely relate to a part of, rather than all of, the embodiments of the present disclosure, and based on these embodiments, a person of ordinary skill in the art may obtain other embodiments without creative effort, which shall also fall within the scope of the present disclosure.

In order to introduce embodiments of the present disclosure, some concepts used in the following descriptions will be first clarified and explained.

### 1. Location service architecture.

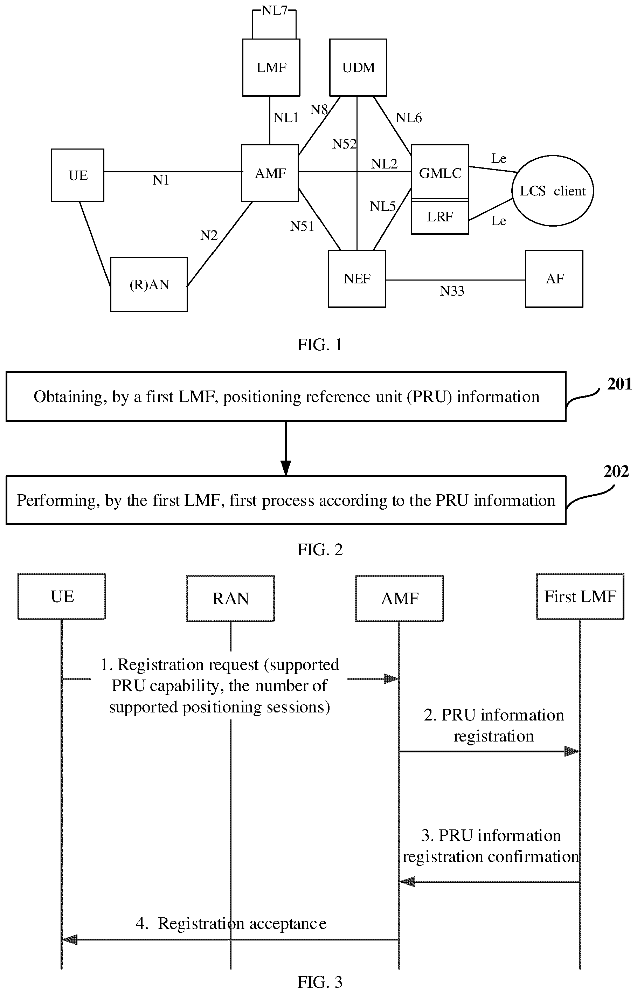

As shown in FIG. 1, main functions of UE and multiple network elements in the location service architecture are as follows:

UE: UE obtains location measurement information according to a positioning request, calculates a location locally or forwards the location measurement information to LMF for location calculation. The relevant Long Term Evolution (Long Term Evolution, LTE) positioning protocols (LTE Positioning Protocol, LPP) are used between UE and LMF.

Radio access network (Radio Access Network, RAN): participates in a positioning procedure for positioning a target UE, provides positioning-related information to LMF, and transmits a positioning message between AMF or LMF and the target UE. The new radio (New Radio, NR) positioning protocol A (NRPPa) protocol is used between the LMF and the next generation Node B (the next Generation Node B, gNB).

Gateway mobile location center (Gateway Mobile Location Center, GMLC): GMLC is the first node that accesses a public land mobile network (Public Land Mobile Network, PLMN) when an external location services (Location Services, LCS) client requests a positioning service. GMLC obtains routing information and privacy attributes of UE and LCS from the unified data management (Unified Data Management, UDM) entity, performs privacy check, and then forwards the positioning message based on the routing information.

Location retrieval function (Location Retrieval Function, LRF): provides routing information for a UE that initiates an Internet multimedia subsystem (IP Multimedia Subsystem, IMS) emergency session, and can be integrated with GMLC.

UDM: stores LCS privacy settings and routing information of UE.

AMF: manages a positioning request received from GMLC, network exposure function (Network Exposure Function, NEF) or UE, selects an LMF for the positioning request, supports broadcast of encrypted assistance data, and stores UE positioning capability.

LMF: is responsible for managing and scheduling resources required to positioning a UE. When receiving a positioning request from a serving AMF, the LMF interacts with the UE and the access network to obtain positioning assistance information or location information. LMF can decide to use a local coordinate system.

NEF: Location services can be opened to AF.

### 2. Positioning reference unit (PRU)

(1) PRU is a device whose location is known in advance or can be accurately measured. The type of the device may be a terminal or a base station.

There are two methods to eliminate a timing deviation between base stations (including a clock deviation and residual timing errors of transmission and reception channels) based on PRU: a first method is real-time double differential; and a second method is non-real-time timing deviation pre-compensation scheme. In the second method, based on the PRU, a difference in timing deviations between different base stations may be measured within a period of time, and then may be notified to the base station for calibration; or a difference in timing deviations between different base stations may be reported to a positioning server, and is eliminated in advance when calculating a location of a target UE.

Using information such as a location of PRU and measurement quantity to assist in calculating a location of a target UE to be positioned can effectively improve positioning accuracy.

Before using measurement information and location information of a PRU, the PRU needs to be registered to a network side, so that the network side can use the device during the positioning procedure of the target UE to improve positioning accuracy.

Specifically, embodiments of the present disclosure provide a method for obtaining information of a positioning reference unit, to solve a problem of low usage efficiency of RRUs in related technologies.

As shown in FIG. 2, an embodiment of the present disclosure provides a method for obtaining information of a PRU, which is applied to an LMF. The LMF is a first LMF, and specifically includes the following steps:

step 201: obtaining, by the first LMF, positioning reference unit (PRU) information; and

step 202: performing, by the first LMF, first process according to the PRU information.

The first processing includes at least one of the following:
(1) Storing the PRU information.

After obtaining the PRU information, the first LMF may store the PRU information. The PRU information may include PRU information within a service range of the first LMF, or may also include PRU information within a coverage range of other LMFs.

Optionally, the first LMF may serve as a network function that stores information on multiple PRUs under a coverage range of multiple LMFs, or may provide the PRU information to other network functions.

(2) Transmitting the PRU information to a first network function.

The first network function may be used to store the PRU information. Optionally, the first network function may store PRU information under a coverage range of multiple LMFs. For example, the first network function may store PRU information in the entire network. The first network function may be a control-plane network function, that is, the PRU information is stored in the control-plane network function. The first network function may be a network element in related technologies, such as AMF, UDM, and unified data repository (Unified Data Repository, UDR), resource and admission control subsystem (Resource and Admission Control Subsystem, RACS), network repository function (Network Repository Function, NRF), etc.. The first network function may also be a newly added network element, or another LMF.

The first network function may provide the PRU information to other network functions.

(3) Determining location information of a UE according to the PRU information.

After obtaining the PRU information, the first LMF may use the PRU information to assist in positioning the UE and obtain more accurate UE location information.

In the embodiment, the PRU may be a terminal or a base station, the first LMF obtains the PRU information, and the first LMF transmits the PRU information to the first network function, which may be a process where the PRU registers to a network.

After obtaining the PRU information, the first LMF performs the above three first processes, where only one of the above processes may be performed, or multiple processes of the above processes may be performed at the same time. For example, the first LMF stores the PRU information, and transmits the PRU information to the first network function for storage; the first LMF stores the PRU information, and obtains location information of a UE according to the PRU information; the first LMF transmits the PRU information to the first network function, and obtains location information of a UE according to the PRU information. Other combinations are not listed one by one.

An example is given that the LMF is a second LMF, the second LMF is adjacent to the first LMF, and a PRU is located in an overlapping area of coverage areas of the first LMF and the second LMF, then the first LMF may transmit the PRU information to the second LMF, so both the first LMF and the second LMF can use the PRU information. It should be noted that this example is only for illustration, and the second LMF may be any LMF.

In the embodiments of the present application, after obtaining the PRU information, the LMF may perform processing such as storing the PRU information, transmitting the PRU information to the first network function, obtaining the location of the UE according to the PRU information. The first LMF stores the PRU information, and/or reports the PRU information to the first network function, so that other network elements can obtain the PRU information from the first LMF and/or the first network function, thereby improving the usage efficiency of PRU.

Optionally, the PRU information includes PRU information related to other LMFs in addition to the first LMF.

In the embodiment, the PRU information obtained by the first LMF may include PRU information related to other LMFs in addition to the first LMF, and the other LMFs may include one or multiple other LMFs in addition to the first LMF in the entire network. Optionally, the PRU information includes information of a PRU within a coverage range of the first LMF itself, and further includes information of a PRU within a coverage range of other LMFs.

For example, the PRU information stored by the first LMF may include PRU information about other LMFs in addition to the first LMF, then the first LMF may serve as a network function having PRU information covering the entire network, and other network functions can obtain required PRU information from the first LMF to achieve positioning of multiple UEs. For another example, when the first LMF is positioning a target UE, even if the target UE and a PRU required for UE-assisted positioning is not located within a coverage range of a same LMF, UE positioning can still be realized.

Optionally, the obtaining the PRU information includes at least one of the following:
1) Receiving the first PRU information transmitted by an AMF.

In the embodiment, the PRU information may include first PRU information transmitted by the AMF, and the first PRU information may include PRU information transmitted by the PRU to the AMF and/or PRU information obtained by the AMF itself.

The AMF stores the first PRU information in the first LMF. Optionally, the AMF may also store the first PRU information in a first network function.

2) Performing positioning on a PRU to obtain second PRU information.

In the embodiment, in addition to the PRU information reported by the AMF, the first LMF may also locate the PRU by itself to obtain the second PRU information. The first LMF locates the PRU, and the LMF stores the PRU information locally or in the first network function.

As an optional embodiment, the performing positioning on the PRU to obtain the second PRU information includes: receiving a first request message transmitted by the AMF, where the first request message includes PRU indication information; and performing positioning on the PRU based on the PRU indication information to obtain the second PRU information.

In the embodiment, the AMF transmits a first request message to the LMF. The first request message may include PRU indication information for indicating to the first LMF that the request is for PRU registration. The first LMF locates the PRU based on the first request message to obtain the second PRU information.

3) Receiving third PRU information transmitted by a second LMF.

The second LMF is an LMF other than the first LMF, such as an LMF adjacent to the first LMF. The other LMF may transmit the obtained third PRU information to the first LMF for storage.

4) Receiving fourth PRU information transmitted by the PRU.

The PRU information obtained by the first LMF may include PRU information transmitted by the PRU, such as load of the PRU, power of the PRU, and other information. Optionally, the first LMF may receive the fourth PRU information transmitted by the PRU through the AMF, that is, the PRU transmits the fourth PRU information to the AMF, and the AMF forwards the fourth PRU information to the first LMF. Optionally, when the AMF forwards the fourth PRU information to the first LMF, PRU information obtained by the AMF itself may be also carried. For example, the first PRU information may include an LCS correlation identity, a PRU status and other information.

In the embodiment, the PRU information obtained by the first LMF may include one or more of: first PRU information reported by the AMF, second PRU information obtained by locating a PRU by the first LMF, third PRU information transmitted by other LMFs, and fourth PRU information reported by the PRU. The first LMF stores the PRU information locally, which may be obtained by other LMFs. Optionally, the first LMF may transmit the PRU information to the first network function for storage, so that other LMFs can obtain and use it. The first LMF may also position a UE according to the PRU information to obtain more accurate UE location information.

Taking the PRU being a UE as an example, as shown in FIG. 3, the execution process of the LMF receiving the first PRU information transmitted by the AMF may include:
step 1, the UE (i.e., PRU) transmits a registration request to the AMF, where the registration request message carries PRU information such as supported PRU capability, the number of supported positioning sessions, and battery power;
step 2, the AMF transmits PRU information registration to the first LMF, where parameters include first PRU information such as a PRU identifier, a serving area, the number of supported positioning sessions, a serving cell of the PRU, a status of the PRU, a load of the PRU, and battery power;
step 3, the first LMF returns a PRU information registration confirmation message to the AMF;
step 4, the AMF returns a registration acceptance message to the UE.

As an optional embodiment, the transmitting the PRU information to the first network function includes at least one of the following:
transmitting the PRU information to a target network function;
transmitting the PRU information to a second LMF.

In the embodiment, the first network function may be the target network function or the second LMF. The target network function may be a newly-added network element or a control-plane network function in related technologies, such as NRF. The first LMF may transmit the PRU information to the target network function for storage, or may transmit the PRU information to the second LMF for storage.

Optionally, the transmitting the PRU information to the target network function includes: transmitting a second request message to the target network function, where the second request message includes the PRU information.

In the embodiment, the second request message is used to request the target network function to store the PRU information. For example, when the target network function is NRF, the second request message may be a network function update request.

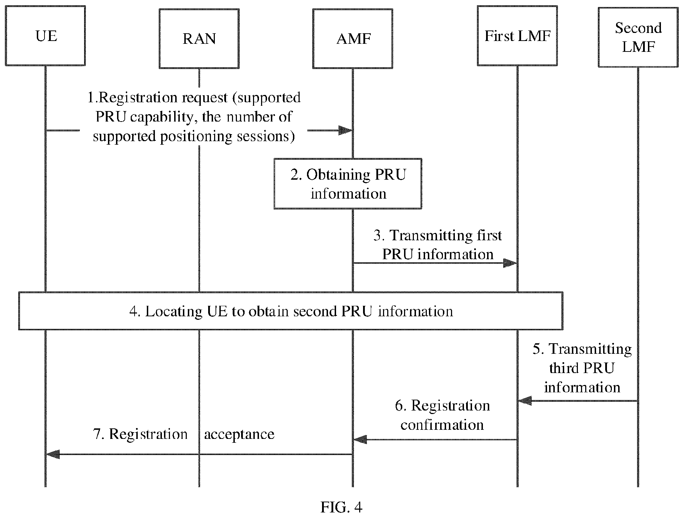

As shown in FIG. 4, an example is given that the PRU is a UE, the PRU information obtained by the first LMF includes the first PRU information reported by the AMF and the second PRU information obtained by the first LMF itself by locating the PRU, and the third PRU information transmitted by the second LMF, and the obtaining the PRU information by the first LMF includes the following steps.

Step 1: the UE transmits a registration request message to the AMF, where the registration request message may carry information such as supported PRU capability (that is, PRU transmits PRU information), the number of supported positioning sessions, and other information.

Step 2: the AMF obtains the PRU information, such as a status of the PRU and an LCS correlation identity, based on the PRU capability reported by the UE.

Step 3: the AMF transmits the PRU capability information reported by the UE and the PRU information obtained by the AMF (which are combined into the first PRU information) to the first LMF, where the PRU information may include a PRU indication used to instruct the first LMF to locate the PRU.

Step 4: after receiving the first PRU information, the first LMF triggers a UE positioning procedure to obtain the second PRU information.

The first LMF triggers the UE positioning procedure to obtain measurement information and location information of the PRU (i.e., the second PRU information). The first LMF locally stores the PRU information, which may include an identity (IDentity, ID) of a serving cell of the PRU, ID of serving AMF, LCS correlation identity, measurement information of the PRU, a location of the PRU, etc.

Step 5: the first LMF receives the third PRU information transmitted by the second LMF.

It should be noted that an execution order of step 5 and step 1 to step 4 in the embodiment is not limited. That is, the time when the first LMF receives the third PRU information transmitted by the second LM, the time when the LMF receives the first PRU information transmitted by the AMF, and the time when performing positioning on the PRU do not have a fixed execution order.

Step 6: the first LMF returns a PRU information registration confirmation message to the AMF.

Step 7: the AMF returns a registration acceptance message to the UE.

Optionally, when the PRU registers to the network side, the AMF may confirm subscription data from the UDM to determine whether to accept the registration request of the PRU, which is explained below through specific embodiments.

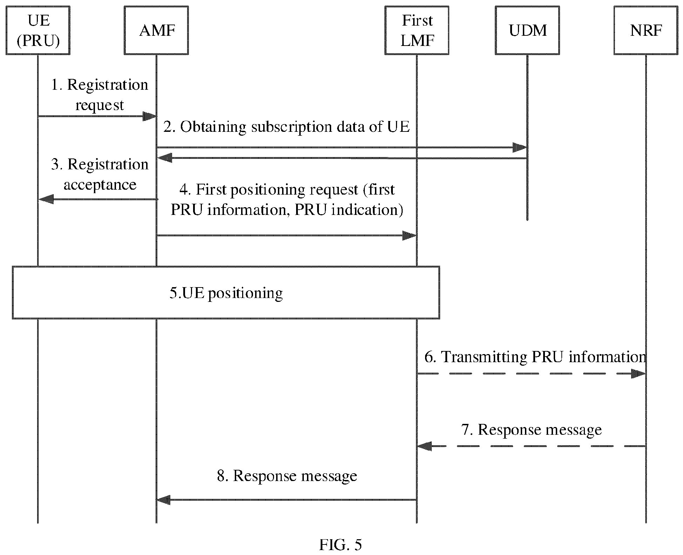

As shown in FIG. 5, an example is given that the PRU is a UE, the PRU information obtained by the first LMF includes the first PRU information reported by the AMF and the second PRU information obtained by positioning the PRU by the first LMF itself, and the first network function is the NRF (that is, the first LMF transmits the PRU information to the NRF), the performing information registration by the PRU may include the following processes.

Step 1: the UE transmits a registration request message to the AMF, and the registration request message may carry a PRU capability.

Step 2: the AMF transmits an obtaining request to the UDM to obtain subscription data of the UE, such as "Nudm_SDM_Get" signaling; if the subscription data does not include subscription data of a related PRU of the UE, the AMF rejects the registration request; otherwise, accept the registration request.

Step 3: the AMF returns a registration acceptance message to the UE.

Step 4: after the PRU is successfully registered, the AMF transmits first PRU information to the first LMF. Optionally, the AMF may transmit a request message (i.e., the first request message) of "Nlmf_Location_DetermineLocation" to the LMF. The message includes PRU indication information, which is used to indicate the first LMF that the positioning request is a request to position the c.

Step 5: after receiving the request message, the first LMF triggers a positioning procedure for the UE (the positioning is to obtain the second PRU information).

The first LMF triggers the positioning procedure for the UE to obtain measurement information and location information of the PRU (i.e., the second PRU information). The first LMF locally stores the PRU information, which may include serving cell ID of the PRU, serving AMF ID, LCS correlation identity, PRU measurement information, PRU location information, etc.

Step 6: the first LMF transmits the PRU information to the NRF.

Specifically, the first LMF may invoke "Nnrf_NFManagement_NFUpdate" request from the NRF. The message includes a type of NF (which may be LMF or PRU) and supported PRU information. The PRU information may include serving cell ID of the PRU, serving AMF ID, LCS correlation identity, PRU measurement information, PRU location information, etc.

Step 7: the NRF returns a response message to the first LMF, such as "Nnrf_NFManagement_NFUpdate" response message.

Step 8: the first LMF returns a response message to the AMF, such as "Nlmf_Location_DetermineLocation Response" message. The AMF may store the LCS correlation identity in the context of the PRU.

Optionally, after obtaining the PRU information, the first LMF may also transmit the PRU information to the second LMF. The execution process of transmitting the PRU information to the second LMF is similar the above execution process of transmitting the PRU information to the NRF, which will not be described in detail here.

As an optional embodiment, the determining the location information of the UE according to the PRU information further includes: obtaining measurement information and/or location information of a PRU according to the PRU information; and determining the location information of the UE based on the measurement information and/or the location information of the PRU.

In the embodiment, when using the PRU to locate the UE, it is necessary to obtain the measurement information and/or the location information of the PRU. The UE is a UE that needs positioning. The measurement information of the PRU includes, for example, reference signal received power, transmission and reception delay, reference signal time difference, relative arrival time, etc.

Optionally, before obtaining the measurement information and/or the location information of the PRU, the method further includes: transmitting a third request message to the first network function; and receiving a first response message transmitted by the first network function, where the first response message includes the PRU information.

In the embodiment, since the PRU information may be affected by environmental factors such as weather, air pressure, time, etc., when the first LMF needs to locate the UE, the first LMF may obtain real-time PRU information from the first network function, so as to ensure accuracy of UE positioning.

When the first LMF receives the positioning request for the UE, the first LMF may search for a PRU that can locate the UE from the locally stored PRU information, or from the first network function. For example, if the first LMF determines a PRU used to assist in UE positioning based on the locally stored PRU information, the first LMF directly performs a positioning procedure for the PRU to obtain the measurement information and/or the location information of the PRU. If the first LMF does not find a PRU available for the UE to be located based on the locally stored PRU information, the first LMF may obtain the PRU information from the first network function and determine the available PRU from the obtained PRU information.

Optionally, when the first LMF receives a positioning request for the UE, if the first LMF does not store the PRU information locally, the first LMF may directly request the PRU information from the first network function.

It should be noted that if the first LMF stores the PRU information locally, the first LMF may also directly obtain the PRU information from the first network function. Whether the first LMF locally stores PRU information is not a limiting condition for obtaining the PRU information from the first network function.

As an optional embodiment, when the first LMF requests the PRU information from the first network function, the third request message transmitted to the first network function may carry a condition of the PRU information that needs to be obtained, for example, it is necessary to obtain a PRU within a specific range, a cell identity of a UE to be located, etc. After receiving the third request message, the first network function may select PRU information that meets the condition and return the PRU information to the first LMF.

For example, if the third request message carries a cell identity of the UE to be located, the first network function selects PRU information that can cover a service range corresponding to the cell identity and returns the PRU information to the first LMF.

Optionally, the first network function may also select PRU information that meets a condition according to its own predetermined rules and transmit the PRU information to the first LMF. For example, if the third request message does not include a selection condition of the PRU information, the first network function selects PRU information that meets the predetermined condition according to a current status of each PRU (such as power, load, etc.) and returns it to the first LMF.

Optionally, in a case that the third request message does not include a selection condition for PRU information, the first network function may transmit all stored PRU information to the first LMF, and the first LMF may select an available PRU according to a predetermined condition. For example, the first LMF selects a PRU whose load, power, etc. meet a predetermined threshold according to the PRU information, so as to locate the UE; or the first LMF selects a PRU that meets a cell service range of a UE to be located, so as to locate the UE.

As an optional embodiment, the obtaining the measurement information and/or the location information of the PRU according to the PRU information includes one of the following:
(1) performing positioning on the PRU according to the PRU information to obtain the measurement information and/or the location information of the PRU;
(2) obtaining the measurement information and/or the location information of the PRU through a second LMF;
(3) obtaining the measurement information and/or the location information of the PRU through the first network function.

In the embodiment, when the first LMF obtains the measurement information and/or the location information of the PRU, the first LMF may directly locate the PRU; if the PRU is not within a coverage range of the LMF, the first LMF may locate the PRU through a second LMF, the second LMF may be a serving LMF of the PRU.

Optionally, the obtaining the measurement information and/or the location information of the PRU through the second LMF may include: transmitting a fourth request message to the second LMF; receiving a second response message transmitted by the second LMF, where the second response message includes the measurement information and/or the location information of the PRU.

The first LMF may transmit the fourth request message to the serving LMF of a selected PRU, used to request the second LMF to locate the PRU. After locating the PRU to obtain the measurement information and/or the location information of the PRU, the second LMF transmits the measurement information and/or the location information of the PRU to the first LMF, and then the first LMF uses the measurement information and/or the location information of the PRU to perform positioning on the UE. Optionally, the fourth request message may carry identification information of the PRU, to enable the second LMF to locate a corresponding PRU.

It should be noted that when the first LMF obtains the measurement information and/or the location information of the PRU through the second LMF, information may be forwarded through another network function. For example, when there is no communication interface between the first LMF and the second LMF, information may be forwarded through the other network function connecting the two LMFs.

Optionally, the obtaining the measurement information and/or the location information of the PRU through the first network function includes: transmitting a fifth request message to the first network function; and receiving a third response message transmitted by the first network function, where the third response message includes the measurement information and/or the location information of the PRU.

In the embodiment, when the first LMF obtains the measurement information and/or the location information of the PRU, the measurement information and/or the location information of the PRU may be obtained through the first network function. Optionally, if the first network function does not have the ability to locate the PRU, the first network function may request a serving LMF (i.e., the second LMF) of the PRU to locate the PRU, thereby obtaining the measurement information and/or the location information of the PRU.

Specifically, the first LMF may transmit a fifth request message to the first network function, used to request the measurement information and/or the location information of the PRU; the first network function transmits a sixth request message to the second LMF, used to request the second LMF to locate the PRU and obtain the measurement information and/or the location information of the PRU. After obtaining the measurement information and/or the location information of the PRU through measurement, the second LMF transmits it to the first network function. The first network function returns the measurement information and/or the location information of the PRU to the first LMF through the third response message.

Optionally, the fifth request message may carry information of the serving LMF of the PRU. For example, if the second LMF is not connected to the first LMF, the message may be forwarded through the first network function. If the fifth request message carries the information of the serving LMF of the PRU, the first network function may request the measurement information and/or the location information of the PRU from the serving LMF.

Optionally, the PRU information includes at least one of the following: an identity of PRU, a serving area of the PRU, information of a serving AMF of the PRU, a serving cell of the PRU, a power of the PRU, a load of the PRU, a status of the PRU, LCS correlation identity, information of a serving LMF of the PRU, location information of the PRU, measurement information of the PRU.

In the embodiment, the PRU information may include PRU information provided by the PRU, PRU information obtained by the AMF, and PRU information obtained by positioning the PRU by the LMF. For example, the information provided by the PRU includes one or more pieces of information such as an identity of the PRU, a power of the PRU, a load of the PRU, a capability to support the PRU, and a serving area of the PRU. The PRU information provided by the AMF may include one or more of the following: LCS correlation identity, a status of the PRU, a serving cell of the PRU, a serving area of the PRU, etc. The PRU information obtained by locating the PRU by the LMF includes one or more pieces of information such as a location of the PRU and measurement information of the PRU.

It should be noted that information of serving area of the PRU may be provided by the PRU itself or may be provided by the AMF.

The execution process of the first LMF using the PRU information to locate the UE is illustrated below in combination with embodiments.

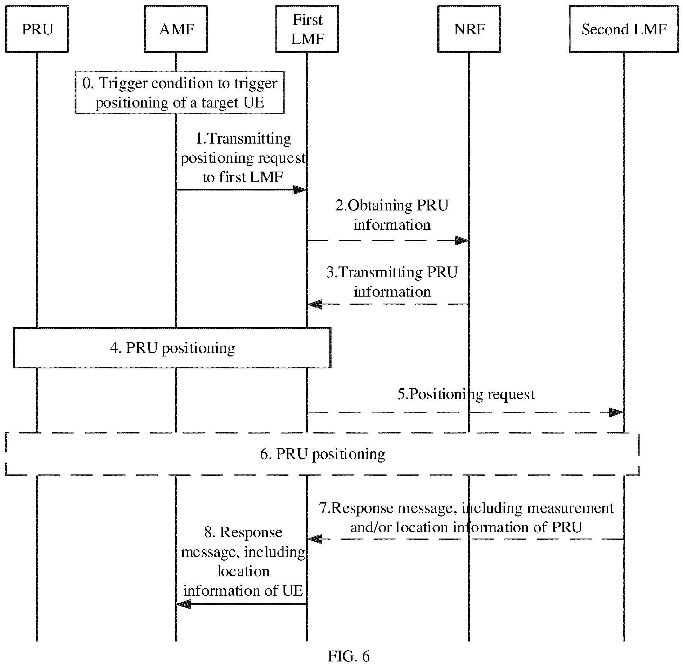

As shown in FIG. 6, an example is given that the first network function is NRF, and the first LMF perform positioning on the PRU through the second LMF, the following steps are included.

Step 0: the AMF detects a trigger condition used to trigger positioning of a target UE. For example, the AMF receives a location information obtaining request from GMLC, such as "Namf_Location_ProvidePositioningInfo request".

Step 1: the AMF transmits a positioning request to a first LMF. The positioning request is, for example, "Nlmf_Location_DetermineLocation".

Step 2: the first LMF obtains PRU information from NRF. For example, the first LMF may transmit "Nnrf_NFDiscovery" request to the NRF. Parameters of the request message may include the type of NF being LMF, a serving cell ID of the target UE, PRU indication and other information.

Step 3: the NRF transmits the PRU information to the first LMF. For example, the NRF may transmit "Nnrf_NFDiscovery" response message to the first LMF. The response message may carry the PRU information and/or LMF ID.

Step 4: the first LMF triggers a UE positioning procedure to a PRU according to the PRU information, and obtains measurement information and/or location information of the PRU. The PRU is a PRU used to assist in positioning of the target UE.

Optionally, step 5: the first LMF transmits a positioning request to a serving LMF of the PRU (i.e., a second LMF). The positioning request is, for example, Nlmf_Location_DetermineLocation request, which is used to request the second LMF to locate the PRU, to obtain the measurement information and/or the location information of the PRU.

Step 6: the second LMF triggers the UE positioning procedure for the PRU, to obtain the measurement information and/or the location information of the PRU.

Step 7: the second LMF transmits a response message to the first LMF. The response message, such as the "Nlmf_Location_DetermineLocation" message, includes the measurement information and/or the location information of the PRU.

Step 8: the first LMF calculates a location of the target UE based on the measurement information and/or the location information of the PRU obtained in step 4 or step 7, and transmits a response message to the AMF, where the response message includes the location information of the UE, and the response message is, for example, Nlmf_Location_DetermineLocation.

In the embodiment, when the first LMF needs to locate the target UE, the first LMF searches the NRF for available PRU information, locates the PRU according to the PRU information, and obtains the location information and/or measurement information of the PRU. Alternatively, the first LMF requests the serving LMF of the PRU to locate the PRU to determine the location information and/or the measurement information of the PRU, which can locate the PRU by using the PRU information in the case that the UE that needs to be positioned and the PRU do not belong to the same coverage range of the LMF, so as to improve PRU utilization.

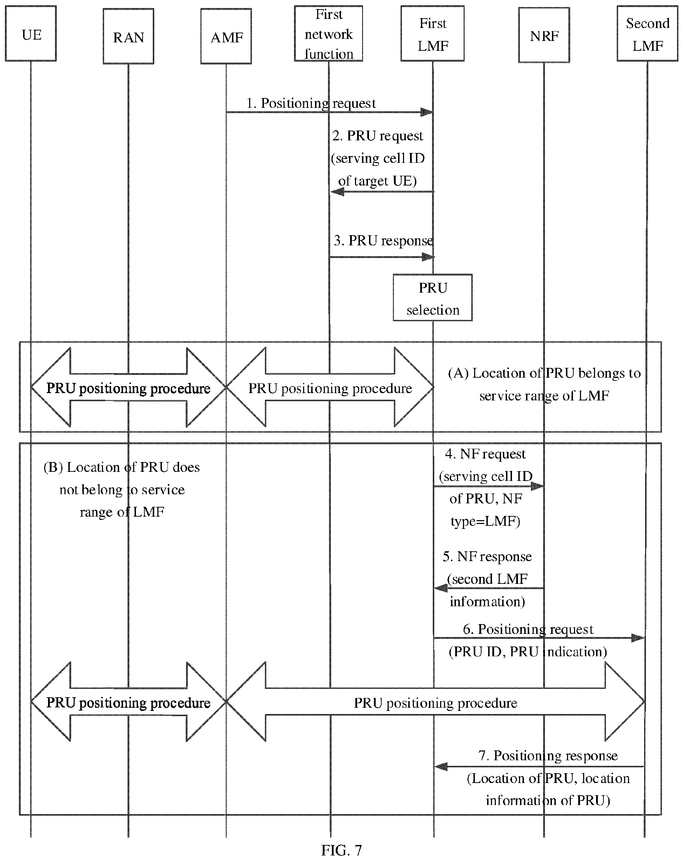

As shown in FIG. 7, an example is given that the first network function is a newly added target network function, and the first LMF locates the PRU through the second LMF. The positioning implementation process of the first LMF using the PRU information to perform positioning on the UE may include the following steps.

Step 1: the AMF transmits a positioning request to the first LMF to request positioning of a target UE.

Step 2: the first LMF decides to use a PRU based on quality of service (Quality of Service, QoS) in the positioning request, network deployment situation of a serving cell where the target UE is located, etc., and the first LMF transmits a PRU request to a target network function, where the request message may carry an identity of a serving cell of the target UE.

Step 3: the target network function transmits a PRU response message to the first LMF. The response message carries information about an available PRU, such as an identity of the PRU, information of a serving AMF of the PRU, an identity of a serving cell of the PRU, a load of the PRU, a power of the PRU, the absolute location of the PRU, a status of the PRU, etc.

The first LMF selects a PRU based on available PRU information. In a case that the selected PRU is within a service range of the first LMF, the first LMF triggers a positioning procedure for the PRU to obtain measurement information and/or location information of the PRU. In a case that the selected PRU is not within the service range of the first LMF, the following steps are performed.

Step 4: the first LMF transmits an NF request to the NRF. The request message may carry an identity of a serving cell of the PRU, and the type of the NF being LMF or PRU.

Step 5: the NRF returns an NF response message to the first LMF. The response message carries an identity of the second LMF, and the second LMF is a serving LMF of the PRU.

Step 6: the first LMF transmits a positioning request to the second LMF. The request message may carry an identity of the PRU, PRU indication and other information. The second LMF initiates a positioning procedure for the PRU to obtain the measurement information and/or the location information of the PRU.

Step 7: the second LMF transmits a positioning response message to the first LMF, where the response message carries the measurement information and/or the location information of the PRU.

The first LMF calculates a location of the target UE by using the measurement information and/or the location information of the PRU, and returns the location of the target UE to the AMF.

The above embodiment has been introduced by taking direct information exchange between the first LMF and the second LMF as an example. In a case that there is no communication interface between the first LMF and the second LMF, a target network function may be used to forward messages, which will be explained below in combination with specific embodiments.

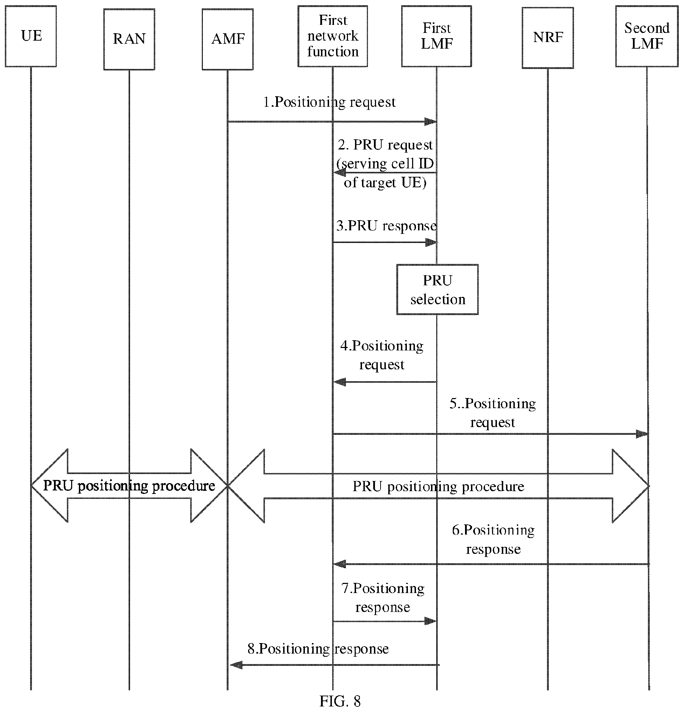

As shown in FIG. 8, an example is given that the first network function is a newly added target network function, the first LMF locates the PRU through the second LMF, and a target network function is used to forward messages between the first LMF and the second LMF, the positioning implementation process of the first LMF using the PRU information to perform positioning on the UE may include the following steps.

Step 1: the AMF transmits a positioning request to the first LMF to request positioning of a target UE.

Step 2: the first LMF decides to use a PRU based on QoS in the positioning request and network deployment situation of a serving cell where the target UE is located. The first LMF transmits a PRU request to a target network function, where the request message may carry an identity of a serving cell of the target UE.

Step 3: the target network function transmits a PRU response message to the first LMF. The response message carries available PRU information, such as an identity of the PRU, information of a serving AMF of the PRU, an identity of a serving cell of the PRU, a load of the PRU, a power of the PRU, the absolute location of the PRU, a status of the PRU, etc.

Step 4: the first LMF selects a PRU based on the available PRU information. The first LMF transmits a positioning request to the target network function, and the request message may carry information such as an identity of the PRU, an LCS correlation identity, and PRU measurement indication.

Step 5: the target network function transmits the positioning request to the second LMF, and the second LMF is a serving LMF of the PRU.

Step 6: the second LMF initiates a positioning procedure for the PRU, and obtains measurement information and/or location information from the PRU. The second LMF transmits a positioning response message to the target network function. The positioning response message may carry the LCS correlation identity, measurement information of the PRU, location information of the PRU, etc.

Step 7: the target network function forwards the positioning response message to the first LMF.

Step 8: the first LMF calculates a location of the target UE based on the measurement information and/or the location information of the PRU, and transmits a location response message to the AMF, where the location response message carries the location of the target UE.

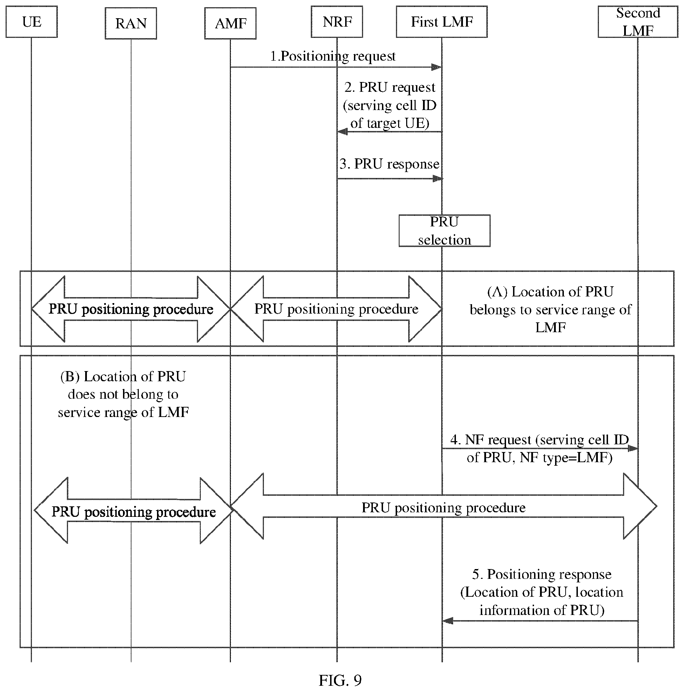

The first network function may also be an NRF. As shown in FIG. 9, an example is given that the first network function is NRF and the first LMF performs positioning on the PRU through the second LMF, and the positioning implementation process of the first LMF using the PRU information to perform positioning on the UE may include the following steps.

Step 1: the AMF transmits a positioning request to the first LMF to request positioning of a target UE.

Step 2: the first LMF decides to use a PRU based on QoS in the positioning request and network deployment situation of a serving cell where the target UE is located. The first LMF transmits a PRU request message to the NRF, where the request message may carry an identity of a serving cell of the target UE.

Step 3: the NRF transmits a PRU response message to the first LMF, where the response message carries available PRU information, such as an identity of the PRU, information of a serving AMF of the PRU, an identity of a serving cell of the PRU, a load of the PRU, a power of the PRU, the absolute location of the PRU, a status of the PRU, etc.

The first LMF selects a PRU based on the available PRU information. In a case that the selected PRU is within a service range of the first LMF, the first LMF triggers a positioning procedure for the PRU to obtain measurement information and/or location information from the PRU. In a case that the selected PRU is not within the service range of the first LMF, the following steps are performed.

Step 4: the first LMF transmits a positioning request message to the second LMF. The second LMF is a serving LMF of the PRU. The positioning request message carries an identity of the PRU, PRU indication and other information. The second LMF initiates a positioning procedure for the PRU to obtain the measurement information and/or the location information of the PRU.

Step 5: the second LMF transmits a positioning response message to the first LMF, where the response message carries the measurement information and/or the location information of the PRU.

The first LMF calculates a location of the target UE by using the measurement information and/or the location information of the PRU, and returns the location of the target UE to the AMF.

As an optional embodiment, the first network function may be an enhanced network function for LMF or AMF.

The AMF is responsible for registering the PRU information to the serving LMF (that is, the serving cell of the PRU is located within a serving area of the LMF), and then notifies other LMFs of the serving LMF of the PRU.

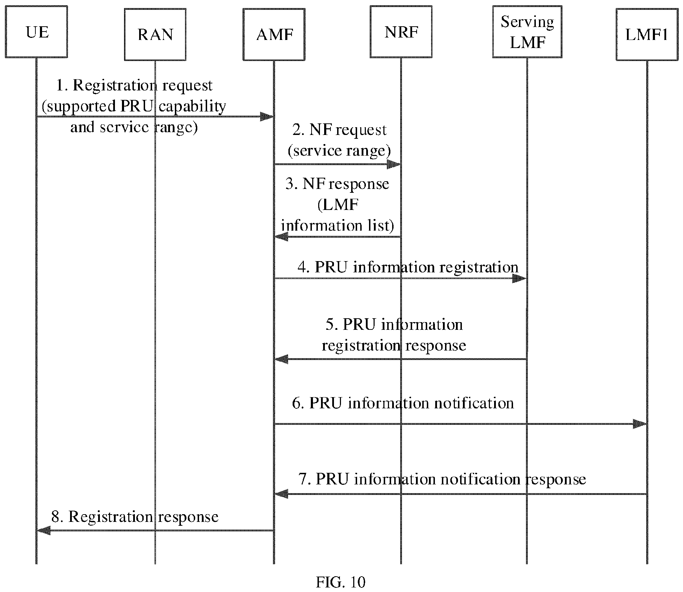

An example is given that the PRU is a UE and the first network function is an enhanced function for LMF, as shown in FIG. 10, the process for the UE to register PRU information to the network includes the following steps.

Step 1: the UE transmits a registration request to the AMF, where the registration request message carries supported PRU capability and service range.

Step 2: the AMF transmits an NF request to the NRF, where the NF request carries a service range of the PRU and requests information about all LMFs that overlap with the service range.

Step 3: the NRF returns an NF response to AMF, and the response message carries an LMF information list.

Step 4: the AMF selects a serving LMF according to a serving cell of the PRU, and then transmits PRU information registration to the serving LMF. The registration message carries an identity of the PRU, a serving area, the number of supported positioning sessions, a serving cell of the PRU, a status of the PRU, and a load of the PRU, a battery power of the PRU, etc.

Step 5: the serving LMF returns a PRU information registration response message to the AMF.

Step 6: the AMF transmits PRU information notification to other LMFs (denoted as LMF1) in the list based on the LMF list obtained in step 3. The message includes an identity of the PRU, information of a serving LMF, a serving AMF, an identity of a serving cell, PRU available indication, and a serving area of the PRU.

Step 7: the LMF1 returns a PRU information notification response to the AMF.

Step 8: the AMF returns a registration response to the PRU.

It should be noted that if some LMFs in the LMF list in step 3 do not belong to the service range of the AMF, the AMF further needs to find serving AMFs of the LMFs from the NRF, and transmit the PRU information notification message to the LMFs through the serving AMFs.

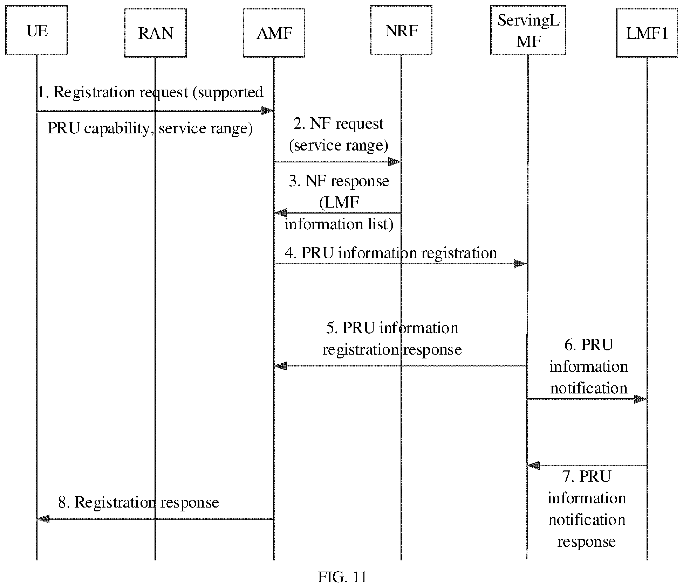

Optionally, for step 6 in FIG. 10, the serving LMF may also transmit a PRU information notification to other LMFs (denoted as LMF1) in the LMF list. Specifically, as shown in FIG. 11, steps 1 to 5 are the same as these steps in FIG. 10. Step 6: the serving LMF transmits a PRU information notification to another LMF in the list (denoted as LMF1) according to the LMF list obtained in step 3, where the message includes an identity of the PRU, information of a serving LMF, a serving AMF, an identity of a serving cell, PRU availability indication, and PRU serving area.

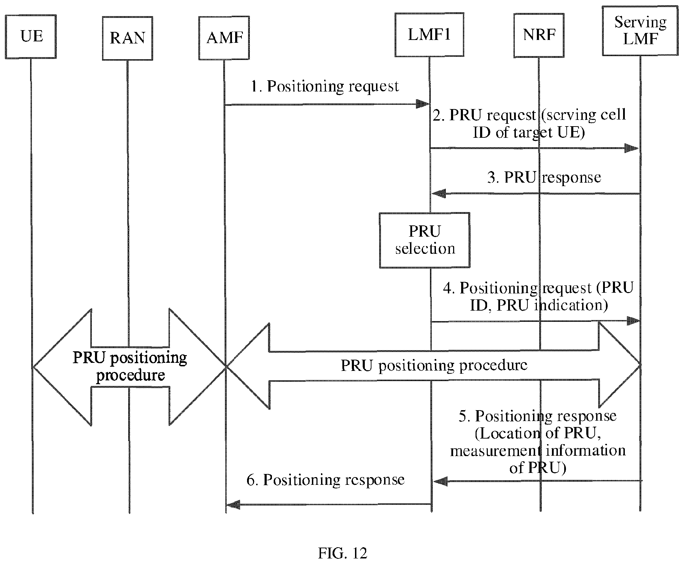

Optionally, after the PRU information is registered into the core network, the serving LMF can directly obtain the information from the PRU using the process in related technologies. The following is an example of how LMF1 obtains the PRU information, as shown in FIG. 12, including the following steps.

Step 1: the AMF transmits a positioning request to LMF1.

Step 2: in a case that a serving cell of a target UE belongs to a serving area of a certain PRU, LMF1 transmits a PRU request to the serving LMF of the PRU, according to an identity of the serving cell of the target UE in the positioning request, a serving area with available PRUs and a corresponding serving LMF that are locally stored, where the request message carries the identity of the serving cell of the target UE.

Step 3: the serving LMF returns a PRU response to LMF1, and the response message carries information of available PRUs.

Step 4: the LMF1 selects a PRU and then transmits a positioning request to the serving LMF.

Step 5: the serving LMF initiates a positioning request to the PRU, to determine the location information and/or measurement information of the PRU, and then transmits the location information and/or the measurement information of the PRU to LMF1.

Step 6: the LMF1 uses the PRU information to calculate a location of the target UE, and then returns the location of the target UE to the AMF.

It should be noted that in a case that there is no communication interface between the LMF1 and the serving LMF, parameters between the LMF1 and the serving LMF may be transferred through 1 AMF (the LMF1 and the serving LMF can be connected to the same AMF) or 2 AMFs (the LMF1 and the serving LMF are connected to different AMFs individually).

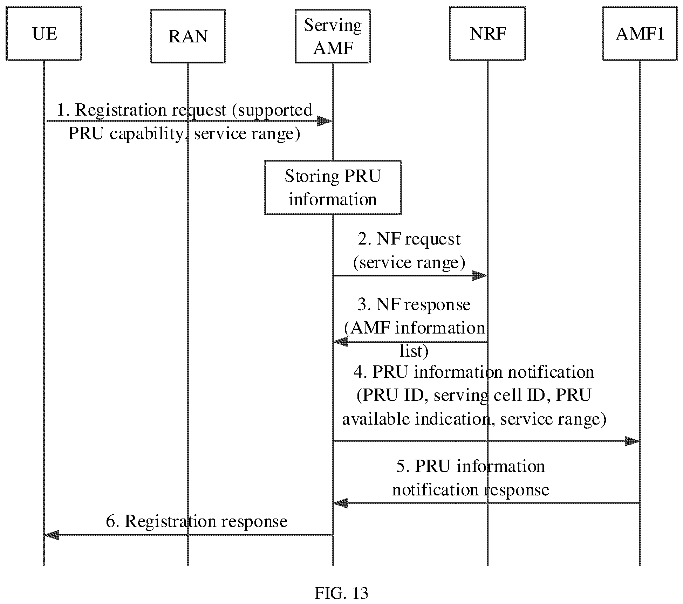

As an optional embodiment, the first network function may also be an enhanced function to AMF. An example is given that the PRU is a UE and the first network function is an enhanced function to AMF, as shown in FIG. 13, the process for the UE to register PRU information to the network includes the following steps.

Step 1: the UE transmits a registration request to a serving AMF. The request message carries PRU capability and a service range of a PRU.

Step 2: the serving AMF stores PRU information and transmits an NF request to the NRF, where the request message carries the service range of the PRU.

Step 3: the NRF returns an AMF information list to the serving AMF.

Step 4: the serving AMF transmits a PRU information notification to AMF1 (an AMF in the AMF list), where the message carries an identity of the PRU, an identity of a serving cell, PRU available indication, and a service range of the PRU.

Step 5: the AMF1 transmits a PRU information notification response to the serving AMF.

Step 6: the serving AMF returns a registration response to the UE.

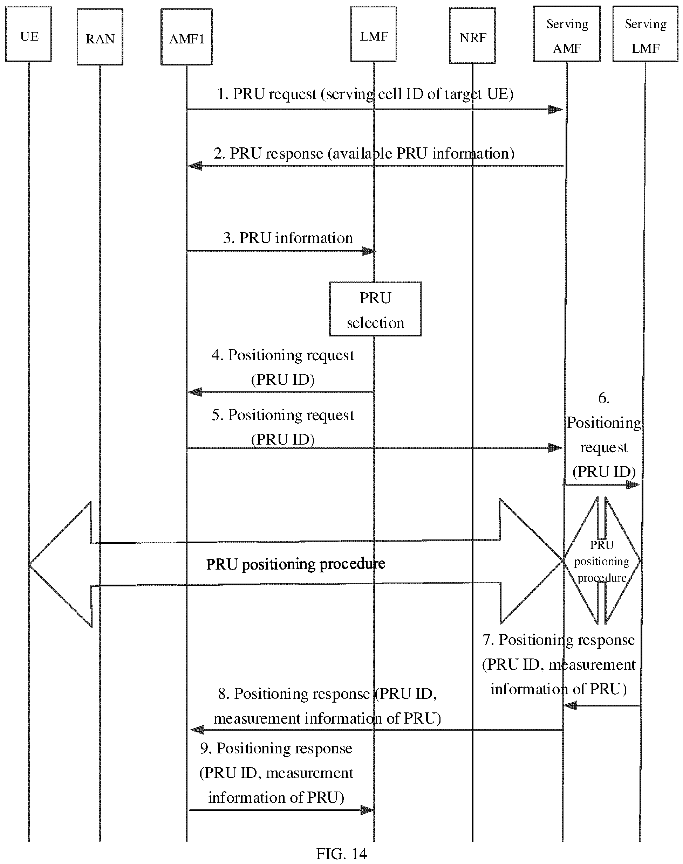

Optionally, the process of LMF initiating positioning for the UE may be as shown in FIG. 14, and includes the following steps.

Step 1: the LMF needs to use the PRU information during positioning of the target UE. The AMF1 determines a serving AMF of an available PRU based on a serving cell where the target UE is located and the locally stored PRU information. The AMF1 transmits a PRU request to the serving AMF, where the request message carries an identity of the serving cell of the target UE.

Step 2: the serving AMF searches for available PRU information based on the locally stored PRU information, and then returns a PRU response to AMF1, where the response message carries the available PRU information.

Step 3: the AMF1 transmits the PRU information to the LMF.

Step 4: the LMF selects a PRU according to the PRU information, and then transmits a positioning request to AMF1, where the positioning request message carries an identity of the selected PRU.

Step 5: the AMF1 transmits a positioning request to the serving AMF of the PRU, where the positioning request message carries an identity of the PRU.

Step 6: the serving AMF transmits a positioning request to the serving LMF. The serving LMF locates the PRU to obtain measurement information and/or location information of the PRU.

Step 7: the serving LMF transmits a positioning response to the serving AMF. The response message carries an identity of the PRU, and measurement information and/or location information of the PRU.

Step 8: the serving AMF transmits a positioning response to the AMF1.

Step 9: the AMF1 transmits a positioning response to the LMF. The LMF uses the measurement information of the PRU to calculate a location of the target UE.

It should be noted that in a case that there is a communication connection between the LMF and the serving LMF, the specific process of positioning the UE by the LMF is different from that in the above FIG. 14 as follows:
Step 2: carrying information of a serving LMF. After the LMF selects a PRU, the LMF executes steps 4 to 5 in the above FIG. 13, and does not execute steps 4 to 9 in the above FIG. 14.

In the embodiments of the present application, after the LMF obtains the PRU information, the LMF can perform processing such as storing the PRU information, transmitting the PRU information to the first network function, and obtaining the location of the UE according to the PRU information. The first LMF stores the PRU information, and/or reports the PRU information to the first network function, so that other network elements can obtain the PRU information from the first LMF and/or the first network function, thereby improving the usage efficiency of PRU. The first LMF or other network elements can locate the UE according to the obtained PRU information, so as to realize positioning of multiple UEs by using the PRU information.

In a case that the LMF needs to locate the target UE, the LMF can search for available PRU information from the first network function or NRF, and can locate the PRU according to the available PRU information to determine the location information and/or measurement information of the PRU. Alternatively, the LMF requests a serving LMF of the PRU to locate the PRU to determine the location information and/or the measurement information of the PRU, which can use the PRU information to locate the UE in a case that the UE that needs to be positioned and the PRU do not belong to a coverage area of the same LMF, thereby to improve the utilization of PRU.

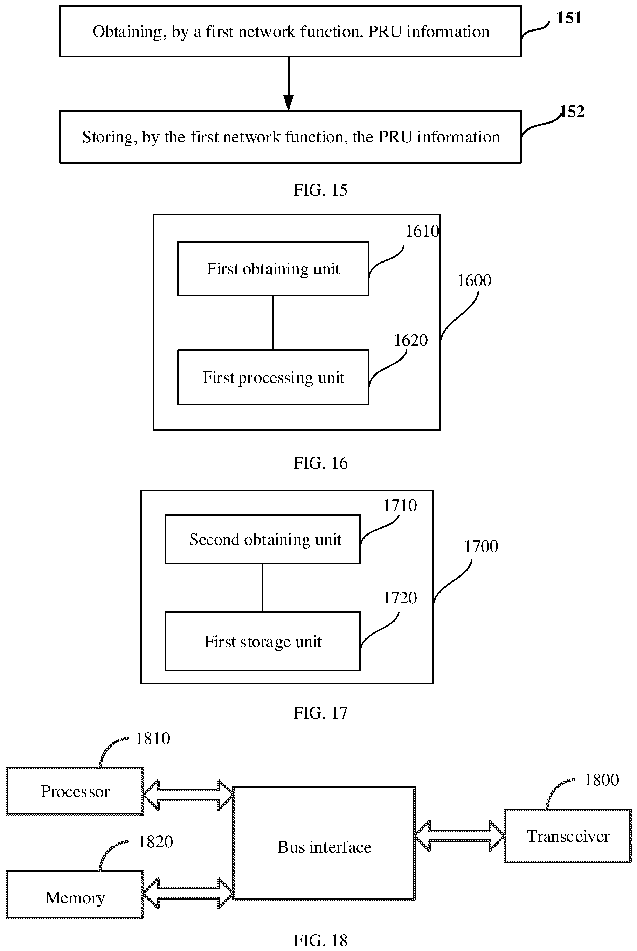

As shown in FIG. 15, an embodiment of the present application further provides a method for obtaining information of a PRU, which is applied to a first network function. The method includes:
step 151: obtaining, by the first network function, PRU information; and
step 152: storing, by the first network function, the PRU information.

The first network function may be used to store the PRU information. Optionally, the first network function may store the PRU information corresponding to a coverage area of multiple LMFs. For example, the first network function may store PRU information in the entire network. The first network function may be a control-plane network function, that is, the PRU information is stored in the control-plane network function. The first network function may be a network element in related technologies, such as LMF, AMF, UDM, UDR, RACS, NRF, etc., and may also be a newly added network element. The first network function may also be other LMFs.

The first network function stores the PRU information, which can be obtained and used by multiple LMFs, to ensure the UE to be positioned by using PRU information in a service range of other LMFs, even if the UE to be positioned and the PRU are not in a service range of the same LMF.

Optionally, the PRU information includes at least one of the following:
(1) First PRU information provided by the AMF.
The PRU information obtained by the first network function may include the first PRU information provided by the AMF. The first PRU information may include PRU information transmitted by the PRU to the AMF and/or PRU information obtained by the AMF itself.

(2) Second PRU information obtained by positioning the PRU by the first LMF.

The PRU information obtained by the first network function may include the second PRU information obtained by the first LMF locating the PRU, and the LMF stores the PRU information locally or in the first network function.

(3) Third PRU information transmitted by the second LMF.

The second LMF may be an LMF other than the first LMF, such as an LMF adjacent to the first LMF. The other LMF may transmit the third PRU information obtained by itself to the first network function for storage. Optionally, the second LMF may also transmit the third PRU information to the first LMF for storage.

(4) Fourth PRU information transmitted by the PRU.

The PRU information obtained by the first network function may include its own information reported by the PRU, such as a load of the PRU, a power of the PRU, and other information.

In the embodiment, the PRU information obtained by the first network function may one or more of: the first PRU information provided by the AMF, the second PRU information obtained by the first LMF positioning the PRU, the third PRU information transmitted by other LMFs, the fourth PRU information reported by the PRU. The PRU information is stored in the first network function for multiple LMFs to obtain and use. Even if a UE to be located and a PRU to be used are not in a coverage area of the same LMF, the LMF can obtain PRU information through the first network function, which not only can obtain more accurate UE location information, but also improve the utilization rate of PRU.

Optionally, the obtaining, by the first network function, the PRU information may include: receiving the PRU information transmitted by the first LMF, where the PRU information transmitted by the first LMF may include PRU information about another LMF in addition to the first LMF. The other LMF may include one or more other LMFs in the entire network except the first LMF. That is, the PRU information may include information of the PRU within a coverage range of the first LMF itself, and may also include information of a PRU within a coverage range of the other LMF.

As an optional embodiment, the obtaining the PRU information includes: receiving a second request message transmitted by the first LMF, where the second request message includes the PRU information.

In the embodiment, the second request message is used to request the first network function to store the PRU information. For example, when the first network function is NRF, the second request message may be network function update request.

As an optional embodiment, the method further includes: receiving a third request message transmitted by the first LMF; and transmitting a first response message to the first LMF, where the first response message includes the PRU information.

In the embodiment, the third request message is used by the first LMF to request PRU information from the first network function. Since the PRU information may be affected by environmental factors such as weather, air pressure, time, etc., when the first LMF locates the UE, the first LMF may obtain real-time PRU information from the first network function, so as to ensure accuracy of UE positioning.

After the first LMF obtains the PRU information that needs to be used when positioning the UE, the first LMF performs positioning on the PRU to obtain measurement information and/or location information of the PRU, so as to perform positioning on the UE according to the measurement information and/or the location information of the PRU.

Optionally, when the first LMF requests the PRU information from the first network function, the third request message transmitted to the first network function may carry a condition of the PRU information that needs to be obtained, for example, it is necessary to obtain a PRU within a specific range, a cell identity of a UE to be located, etc. After receiving the third request message, the first network function may select PRU information that meets the condition and return the PRU information to the first LMF.

For example, in a case that the third request message carries a cell identity of the UE to be located, the first network function selects PRU information that can cover a service range corresponding to the cell identity and returns the PRU information to the first LMF.

Optionally, the first network function may also select PRU information that meets a condition according to its own predetermined rules and transmit the PRU information to the first LMF. For example, in a case that the third request message does not include a selection condition of the PRU information, the first network function selects PRU information that meets the predetermined condition according to a current status of each PRU (such as power, load, etc.) and returns it to the first LMF.

Optionally, in a case that the third request message does not include a selection condition for the PRU information, the first network function may transmit all stored PRU information to the first LMF, and the first LMF may select an available PRU according to a predetermined condition.

As an optional embodiment, the method further includes: receiving a fifth request message transmitted by a first LMF; transmitting a sixth request message to a second LMF; receive a fourth response message transmitted by the second LMF, where the fourth response message includes measurement information and/or location information of the PRU; and transmitting a third response message to the first LMF according to the fourth response message, where the third response message includes the measurement information and/or the location information of the PRU.

In the embodiment, after the first LMF obtains the PRU information, the first LMF can locate the PRU through the second LMF, and the second LMF is a serving LMF of the PRU. The first LMF may transmit the fourth request message to the serving LMF of the selected PRU. In a case that there is no communication interface between the first LMF and the second LMF, messages may be forwarded through the first network function. That is, the first LMF transmits the fifth request message to the first network function, and the first network function transmits a sixth request message to the second LMF according to the fifth request message, to request the second LMF to locate the PRU to obtain measurement information and/or location information of the PRU.

Optionally, the fifth request message may carry information about the serving LMF of the PRU. For example, in a case that the second LMF is not connected to the first LMF, messages may be forwarded through the first network function. In a case that the fifth request message carries information of the serving LMF of the PRU, the first network function may request the measurement information and/or the location information of the PRU from the serving LMF.

After the second LMF locates the PRU and obtains the measurement information and/or the location information of the PRU, the second LMF transmits the measurement information and/or the location information of the PRU to the first LMF through the first network function, then the first LMF uses the measurement information and/or the location information of the PRU to locate the UE.

Optionally, the PRU information includes at least one of the following: an identity of the PRU, a serving area of the PRU, information of a serving AMF of the PRU, a serving cell of the PRU, a power of the PRU, a load of the PRU, a status of the PRU, LCS correlation identity, information of a serving LMF of the PRU, location information of the PRU, measurement information of the PRU.

In the embodiment, the PRU information may include PRU information provided by the PRU, PRU information obtained by the AMF, and PRU information obtained by positioning the PRU by the LMF. For example, the information provided by the PRU includes one or more pieces of information such as an identity of the PRU, a power of the PRU, a load of the PRU, a capability to support the PRU, and a serving area of the PRU. The PRU information provided by the AMF may include one or more of the following: LCS correlation identity, a status of the PRU, a serving cell of the PRU, a serving area of the PRU, etc. The PRU information obtained by locating the PRU by the LMF includes one or more pieces of information such as a location of the PRU and measurement information of the PRU.

It should be noted that information of serving area of the PRU may be provided by the PRU itself or may be provided by the AMF.

It should be noted that the embodiments of the present application can implement all the steps performed by the first network function described in the above embodiments applied to the LMF, and can achieve corresponding technical effects, which will not be repeated here.

In the embodiment of the present application, the first network function stores PRU information, which can be obtained and used by multiple LMFs, to ensure to locate a UE by using information of a PRU in a service range of other LMFs, even if the UE to be positioned and the PRU are not in a service range of the same LMF, thereby achieving positioning of multiple UEs through PRU.

An embodiment of the present application further provides an information registration method for a positioning reference unit, applied to a PRU, which includes: transmitting, by the PRU, PRU information.

In the embodiment, the PRU may be a terminal or a base station. The PRU registers the PRU information to the network.

Optionally, the transmitting the PRU information includes at least one of the following: transmitting the PRU information to a first LMF; transmitting the PRU information to a first network function.

The first LMF and/or the first network function may be used to store the PRU information. Optionally, the first LMF and/or the first network function may store information of a PRU within a coverage area of multiple LMFs. For example, the first LMF and/or the first network function may store information of a PRU within a coverage area of the entire network. The first network function may be a control-plane network function, that is, the PRU information is stored in the control-plane network function. The first network function may be a network element in related technologies, such as UDM, UDR, RACS, NRF, etc., or may be a newly added network element. The first network function may also be other LMFs.

Optionally, the transmitting PRU information to the first network function includes: transmitting the PRU information to the first network function through an AMF; or transmitting the PRU information to the first network function through an AMF and the first LMF.

Specifically, the PRU may transmit the PRU information to the AMF, and the AMF transmits the PRU information to the first network function for registration. Alternatively, the PRU transmits the PRU information to the AMF, the AMF transmits the PRU information to the first LMF, and the first LMF registers the PRU information to the first network function.

In the embodiment, the PRU registers the PRU information to the first network function. The first network function stores the PRU information, which can be obtained and used by multiple LMFs, to ensure to locate a UE by using information of a PRU in a service range of other LMFs, even if the UE to be positioned and the PRU are not in a service range of the same LMF.

It should be noted that the embodiments of the present application can implement all steps performed by the PRU in the above embodiments applied to LMF and the first network function, and can achieve corresponding technical effects, which will not be described again here.

The above embodiment introduces the method for obtaining PRU information of the present disclosure. The corresponding device will be further described in following embodiments in conjunction with the accompanying drawings.

Specifically, as shown in FIG. 16, an embodiment of the present disclosure provides a PRU information obtaining device 1600, which is applied to an LMF. The LMF is a first LMF. The device includes:
a first obtaining unit 1610, configured to obtain PRU information; and
a first processing unit 1620, configured to perform first processing according to the PRU information, where the first processing includes at least one of the following:
   storing the PRU information;
   transmitting the PRU information to a first network function;
   determining location information of a UE according to the PRU information.

Optionally, the PRU information includes PRU information about another LMF in addition to the first LMF.

Optionally, the first obtaining unit includes at least one of the following:
a first receiving subunit, configured to receive first PRU information transmitted by an AMF;
a first positioning subunit, configured to perform positioning on the PRU to obtain second PRU information;
a second receiving subunit, configured to receive the third PRU information transmitted by a second LMF;
a third receiving subunit, configured to receive fourth PRU information transmitted by the PRU.

Optionally, the first positioning subunit is specifically configured to: receive a first request message transmitted by the AMF, where the first request message includes PRU indication information; and perform positioning on the PRU based on the PRU indication information to obtain the second PRU information.

Optionally, the first processing unit includes at least one of the following: a first transmitting subunit, configured to transmit the PRU information to a target network function; a second transmitting subunit, configured to transmit the PRU information to a second LMF.

Optionally, the first transmitting subunit is specifically configured to transmit a second request message to the target network function, where the second request message includes the PRU information.

Optionally, the first processing unit further includes: a first obtaining subunit, configured to obtain measurement information and/or location information of the PRU according to the PRU information; and a second obtaining subunit, configured to determine the location information of the UE according to the measurement information and/or the location information of the PRU.

Optionally, the device further includes: a second transmitting unit, configured to transmit a third request message to the first network function; and a first receiving unit, configured to receive a first response message transmitted by the first network function, where the first response message includes the PRU information.

Optionally, the first obtaining subunit is configured to perform one of the following operations:
performing positioning on the PRU according to the PRU information to obtain the measurement information and/or the location information of the PRU;
obtaining the measurement information and/or the location information of the PRU through a second LMF;
obtaining the measurement and/or the location information of the PRU through the first network function.

Optionally, the obtaining the measurement information and/or the location information of the PRU through the second LMF includes:
transmitting a fourth request message to the second LMF; and
receiving a second response message transmitted by the second LMF, where the second response message includes the measurement information and/or the location information of the PRU.

Optionally, the obtaining the measurement information and/or the location information of the PRU through the first network function includes:
transmitting a fifth request message to the first network function; and
receiving a third response message transmitted by the first network function, where the third response message includes the measurement information and/or the location information of the PRU.

Optionally, the PRU information includes at least one of the following: an identity of the PRU, a serving area of the PRU, information of a serving AMF of the PRU, a serving cell of the PRU, a power of the PRU, a load of the PRU, a status of the PRU, LCS correlation identity, information of a serving LMF of the PRU, location information of the PRU, measurement information of the PRU.

In the embodiments of the present application, after the LMF obtains the PRU information, the LMF can perform processing such as storing the PRU information, transmitting the PRU information to the first network function, and obtaining the location of the UE according to the PRU information. The first LMF stores the PRU information, and/or reports the PRU information to the first network function, so that other network elements can obtain the PRU information from the first LMF and/or the first network function, thereby improving the usage efficiency of PRU. The first LMF or other network elements can locate the UE according to the obtained PRU information, so as to realize positioning of multiple UEs by using the PRU information.

It should be noted here that the above-mentioned device provided by the embodiments of the present disclosure can implement all the method steps implemented by the above-mentioned method embodiments applied to LMF, and can achieve the same technical effect. Therefore, the descriptions and beneficial effects of these embodiments that are the same as the method embodiments will not be repeated here.

As shown in FIG. 17, an embodiment of the present application further provides a device 1700 for obtaining information of a PRU, which is applied to a first network function, and includes: a second obtaining unit 1710, configured to obtain PRU information; and a first storage unit 1720, configured to store the PRU information.

Optionally, the PRU information includes at least one of the following:
first PRU information provided by an AMF;
second PRU information obtained by locating the PRU by a first LMF;
third PRU information transmitted by a second LMF;
fourth PRU message transmitted by the PRU.

Optionally, the second obtaining unit is specifically configured to: receive a second request message transmitted by the first LMF, where the second request message includes the PRU information.

Optionally, the device further includes: a second receiving unit, configured to receive a third request message transmitted by the first LMF; and a third transmitting unit, configured to transmit a first response message to the first LMF, where the first response message includes the PRU information.

Optionally, the device further includes:
a third receiving unit, configured to receive a fifth request message transmitted by a first LMF;
a fourth transmitting unit, configured to transmit a sixth request message to a second LMF;
a fourth receiving unit, configured to receive a fourth response message transmitted by the second LMF, where the fourth response message includes measurement information and/or location information of the PRU; and
a fifth transmitting unit, configured to transmit a third response message to the first LMF according to the fourth response message, where the third response message includes the measurement information and/or the location information of the PRU.

Optionally, the PRU information includes at least one of the following: an identity of the PRU, a serving area of the PRU, information of a serving AMF of the PRU, a serving cell of the PRU, a power of the PRU, a load of the PRU, a status of the PRU, LCS correlation identity, information of a serving LMF of the PRU, location information of the PRU, measurement information of the PRU.

In the embodiment of the present application, the first network function stores PRU information, which can be obtained and used by multiple LMFs, to ensure to locate a UE by using information of a PRU in a service range of other LMFs, even if the UE to be positioned and the PRU are not in a service range of the same LMF, thereby achieving positioning of multiple UEs through PRU.

It should be noted here that the above-mentioned device provided by the embodiment of the present disclosure can implement all the method steps implemented by the above-mentioned method embodiment applied to the first network function, and can achieve the same technical effects. Therefore, the descriptions and beneficial effects of this embedment that are the same as the method embodiments will not be repeated here.

An embodiment of the present application further provides a device for registering information of a PRU, which is applied to PRU and includes: a first transmitting unit, configured to transmit PRU information.

Optionally, the first transmitting unit includes at least one of the following:
a third transmitting subunit, configured to transmit the PRU information to a first LMF;
a fourth transmitting subunit, configured to transmit the PRU information to a first network function.

Optionally, the fourth transmitting subunit is specifically configured to: transmit the PRU information to the first network function through an AMF; or, transmitting the PRU information to the first network function through an AMF and the first LMF.

In the embodiment of this application, the PRU registers the PRU information to the first network function, and the first network function stores the PRU information, which can be obtained and used by multiple LMFs, to ensure to locate a UE by using information of a PRU in a service range of other LMFs, even if the UE to be positioned and the PRU are not in a service range of the same LMF.

It should be noted here that the above-mentioned device provided by the embodiment of the present disclosure can implement all the method steps implemented by the above-mentioned method embodiment applied to the PRU, and can achieve the same technical effects. Therefore, the description and beneficial effects of this embedment that are the same as the method embodiments will not be repeated here.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (Read-Only Memory, ROM), random access memory (Random Access Memory, RAM), magnetic disk, optical disc or other media that can store program codes.

As shown in FIG. 18, an embodiment of the present disclosure further provides a communication device. The communication device may be an LMF, and the LMF is a first LMF. The communication device includes: a memory 1820, a transceiver 1800 and a processor 1810. The memory 1820 is configured to store a computer program; the transceiver 1800 is configured to transmit and receive data under the control of the processor 1810; the processor 1810 is configured to read the computer program in the memory and perform the following operations:
obtaining positioning reference unit (PRU) information; and
performing first processing according to the PRU information, where the first processing includes at least one of the following:
   storing the PRU information;
   transmitting the PRU information to a first network function;
   determining location information of a UE according to the PRU information.

Optionally, the PRU information includes PRU information about another LMF in addition to the first LMF.

Optionally, the processor is configured to read the computer program in the memory and perform at least one of the following operations:
receiving first PRU information transmitted by an AMF;
performing positioning on the PRU to obtain second PRU information;
receiving third PRU information transmitted by a second LMF;
receiving fourth PRU information transmitted by the PRU.

Optionally, the processor is configured to read the computer program in the memory and perform the following operations:
receiving a first request message transmitted by the AMF, where the first request message includes PRU indication information; and
performing positioning on the PRU based on the PRU indication information to obtain the second PRU information.

Optionally, the transceiver is configured to perform at least one of the following operations:
transmitting the PRU information to a target network function;
transmitting the PRU information to a second LMF.

Optionally, the transceiver is specifically configured to: transmit a second request message to the target network function, where the second request message includes the PRU information.

Optionally, the processor is configured to read the computer program in the memory and perform the following operations:
obtaining measurement information and/or location information of the PRU according to the PRU information; and
determining the location information of the UE based on the measurement information and/or the location information of the PRU.

Optionally, the transceiver is further configured to:
transmit a third request message to the first network function; and
receive a first response message transmitted by the first network function, where the first response message includes the PRU information.

Optionally, the processor is configured to read the computer program in the memory and perform one of the following operations:
performing positioning on the PRU according to the PRU information to obtain the measurement information and/or the location information of the PRU;
obtaining the measurement information and/or the location information of the PRU through a second LMF;
obtaining the measurement and/or the location information of the PRU through the first network function.

Optionally, the transceiver is further configured to:
transmit a fourth request message to the second LMF; and
receive a second response message transmitted by the second LMF, where the second response message includes the measurement information and/or the location information of the PRU.

Optionally, the transceiver is further configured to:
transmit a fifth request message to the first network function; and
receive a third response message transmitted by the first network function, where the third response message includes the measurement information and/or the location information of the PRU.

Optionally, the PRU information includes at least one of the following: an identity of the PRU, a serving area of the PRU, information of a serving AMF of the PRU, a serving cell of the PRU, a power of the PRU, a load of the PRU, a status of the PRU, LCS correlation identity, information of a serving LMF of the PRU, location information of the PRU, measurement information of the PRU.

In the embodiment of the present application, after the LMF obtains PRU information, the LMF can perform processing such as storing the PRU information, transmitting the PRU information to the first network function, and obtaining the location of the UE according to the PRU information. The first LMF stores The PRU information and/or the PRU information is reported to the first network function, so that other network elements can obtain the PRU information from the first LMF and/or the first network function, thereby improving the usage efficiency of the PRU., in fact, the first LMF or other network elements can locate the UE according to the obtained PRU information, and now the PRU is used to position multiple UEs.

In FIG. 18, the bus architecture may include any number of interconnected buses and bridges, specifically one or more processors represented by processor 1810 and various circuits of the memory represented by memory 1820 are linked together. The bus architecture can also link together various other circuits such as peripherals, voltage regulators, and power management circuits, which are all well known in the art and therefore will not be described further herein. The bus interface provides interfaces. The transceiver 1800 may be a plurality of elements, including a transmitter and a transceiver, providing a unit for communicating with various other devices over a transmission medium. The processor 1810 is responsible for managing the bus architecture and general processing, and the memory 1820 can store data used by the processor 1810 when performing operations.

Optionally, the processor 1810 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

It should be noted here that the above-mentioned communication device provided by the embodiment of the present disclosure can implement all the method steps implemented by the above-mentioned method embodiment applied to LMF, and can achieve the same technical effects. Therefore, the descriptions and beneficial effects of this embedment that are the same as the method embodiments will not be repeated here.

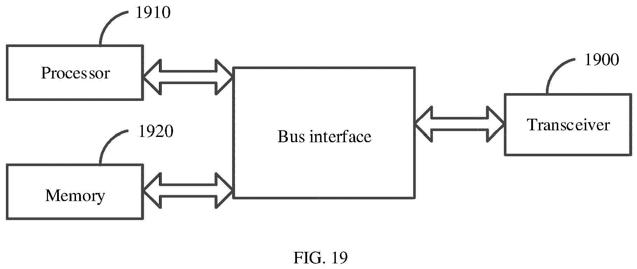

As shown in FIG. 19, an embodiment of the present disclosure further provides a communication device. The communication device may be a first network function, including: a memory 1920, a transceiver 1900, and a processor 1910. The memory 1920 is configured to store a computer program; the transceiver 1900 is configured to transmit and receive data under the control of the processor 1910; the processor 1910 is configured to read the computer program in the memory and perform the following operations: obtaining PRU information; and storing the PRU information.

Optionally, the PRU information includes at least one of the following:
first PRU information provided by an AMF;
second PRU information obtained by locating the PRU by a first LMF;
third PRU information transmitted by a second LMF;
fourth PRU message transmitted by the PRU.

Optionally, the transceiver is configured to: receive a second request message transmitted by the first LMF, where the second request message includes the PRU information.

Optionally, the transceiver is further configured to::
receive a third request message transmitted by the first LMF; and
transmit a first response message to the first LMF, where the first response message includes the PRU information.

Optionally, the transceiver is further configured to::
receive a fifth request message transmitted by a first LMF;
transmit a sixth request message to a second LMF;
receive a fourth response message transmitted by the second LMF, where the fourth response message includes measurement information and/or location information of the PRU; and
transmit a third response message to the first LMF according to the fourth response message, where the third response message includes the measurement information and/or the location information of the PRU.

Optionally, the PRU information includes at least one of the following: an identity of the PRU, a serving area of the PRU, information of a serving AMF of the PRU, a serving cell of the PRU, a power of the PRU, a load of the PRU, a status of the PRU, LCS correlation identity, information of a serving LMF of the PRU, location information of the PRU, measurement information of the PRU.

In the embodiment of this application, the first network function stores PRU information, which can be obtained and used by multiple LMFs, to ensure the UE to be positioned by using PRU information in a service range of other LMFs, even if the UE to be positioned and the PRU are not in a service range of the same LMF.

In FIG. 19, the bus architecture may include any number of interconnected buses and bridges, specifically one or more processors represented by processor 1910 and various circuits of the memory represented by memory 1920 are linked together. The bus architecture can also link together various other circuits such as peripherals, voltage regulators, and power management circuits, which are all well known in the art and therefore will not be described further herein. The bus interface provides interfaces. The transceiver 1900 may be a plurality of elements, including a transmitter and a transceiver, providing a unit for communicating with various other devices over a transmission medium. The processor 1910 is responsible for managing the bus architecture and general processing, and the memory 1920 can store data used by the processor 1910 when performing operations.

The processor 1910 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

It should be noted here that the above-mentioned communication device provided by the embodiment of the present disclosure can implement all the method steps implemented by the above-mentioned method embodiment applied to the first network function, and can achieve the same technical effects. Therefore, the descriptions and beneficial effects of the embedment that are the same as the method embodiments will not be repeated here.

An embodiment of the present disclosure further provides a communication device. The communication device may be a PRU, and includes: a memory, a transceiver, and a processor. The memory is configured to store a computer program; the transceiver is configured to transmit and receive data under the control of the processor; the processor is configured to read the computer program from the memory and perform the following operations: transmitting PRU information.

Optionally, the transceiver is specifically configured to perform at least one of the following operations:
transmitting the PRU information to a first LMF; and
transmitting the PRU information to a first network function.

Optionally, the transceiver is specifically configured to: transmit the PRU information to the first network function through an AMF; or, transmit the PRU information to the first network function through an AMF and the first LMF.

In the embodiment of this application, the PRU registers the PRU information to the first network function, and the first network function stores the PRU information, which can be obtained and used by multiple LMFs, to ensure the UE to be positioned by using PRU information in a service range of other LMFs, even if the UE to be positioned and the PRU are not in a service range of the same LMF.

In the embodiment, the bus architecture may include any number of interconnected buses and bridges, specifically one or more processors represented by the processor and various circuits of the memory represented by the memory are linked together. The bus architecture can also link together various other circuits such as peripherals, voltage regulators, and power management circuits, which are all well known in the art and therefore will not be described further herein. The bus interface provides the interface. A transceiver may be a plurality of elements, including a transmitter and a transceiver, providing a unit for communicating with various other devices over a transmission medium. The processor is responsible for managing the bus architecture and general processing, and the memory can store data used by the processor when performing operations.

The processor may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

It should be noted here that the above-mentioned communication device provided by the embodiment of the present disclosure can implement all the method steps implemented by the above-mentioned method embodiment applied to PRU, and can achieve the same technical effects. Therefore, the descriptions and beneficial effects of the embodiment that are the same as the method embodiments will not be repeated here.

An embodiment of the present disclosure further provides a processor readable storage medium, where the processor readable storage medium stores a computer program. The computer program is executed by the processor to implement steps of the above method for obtaining information of the PRU, and implement steps of the above method for registering information of the PRU, and can achieve the same technical effects, which will not be repeated here to avoid repetition. The processor readable storage medium may be any available medium or data storage device that can be accessed by the processor, including but not limited to magnetic storage (such as floppy disk, hard disk, magnetic tape, magneto-optical disk (Magneto-Optical disk, MO)), optical storage (such as compact disc (Compact Disc, CD), digital versatile disc (Compact Disc, DVD), blue-ray disc (Blu-ray Disc, BD), high-definition versatile disc (High-definition Versatile Disc, HVD)), and semiconductor memory (such as ROM, erasable programmable ROM (Erasable PROM, EPROM), electrically erasable programmable ROM (EEPROM), non-volatile memory (NAND FLASH), solid-state drive (Solid State Disk, SSD)), etc.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A method for obtain information of a positioning reference unit, comprising:
obtaining, by a first LMF, positioning reference unit (PRU) information; and
performing, by the first LMF, first processing according to the PRU information,
wherein the first processing comprises at least one of the following:
storing the PRU information;
transmitting the PRU information to a first network function;
determining location information of a UE according to the PRU information.

2. The method according to claim 1, wherein the PRU information comprises PRU information about another LMF in addition to the first LMF.

3. The method according to claim 1, wherein the obtaining the PRU information comprises at least one of the following:
receiving first PRU information transmitted by an AMF;
performing positioning on the PRU to obtain second PRU information;
receiving third PRU information transmitted by a second LMF;
receiving fourth PRU information transmitted by the PRU.

4. The method according to claim 3, wherein the performing positioning on the PRU to obtain the second PRU information comprises:
receiving a first request message transmitted by the AMF, wherein the first request message comprises PRU indication information; and
performing positioning on the PRU based on the PRU indication information to obtain the second PRU information.

5. The method according to claim 1, wherein the transmitting the PRU information to the first network function comprises at least one of the following:
transmitting the PRU information to a target network function;
transmitting the PRU information to a second LMF.

6. The method according to claim 5, wherein the transmitting the PRU information to the target network function comprises:
transmitting a second request message to the target network function, wherein the second request message comprises the PRU information.

7. The method according to claim 1, wherein the determining the location information of the UE according to the PRU information comprises:
determining measurement information and/or location information of the PRU according to the PRU information; and
determining the location information of the UE based on the measurement information and/or the location information of the PRU.

8. The method according to claim 7, wherein before determining the measurement information and/or the location information of the PRU, the method also comprises:
transmitting a third request message to the first network function; and
receiving a first response message transmitted by the first network function, wherein the first response message comprises the PRU information.

9. The method according to claim 7, wherein the determining the measurement information and/or the location information of the PRU according to the PRU information comprises one of the following:
performing positioning on the PRU according to the PRU information to determine the measurement information and/or the location information of the PRU;
determining the measurement information and/or the location information of the PRU through a second LMF;
determining the measurement and/or the location information of the PRU through the first network function.

10. The method according to claim 9, wherein the determining the measurement information and/or the location information of the PRU through the second LMF comprises:
transmitting a fourth request message to the second LMF; and
receiving a second response message transmitted by the second LMF, wherein the second response message comprises the measurement information and/or the location information of the PRU.

11. The method according to claim 9, wherein the determining the measurement information and/or the location information of the PRU through the first network function comprises:
transmitting a fifth request message to the first network function; and
receiving a third response message transmitted by the first network function, wherein the third response message comprises the measurement information and/or the location information of the PRU.

12. The method according to claim 1, wherein the PRU information comprises at least one of the following:
an identity of the PRU, a serving area of the PRU, information of a serving AMF of the PRU, a serving cell of the PRU, a power of the PRU, a load of the PRU, a status of the PRU, LCS correlation identity, information of a serving LMF of the PRU, location information of the PRU, measurement information of the PRU.

13. An method for obtaining information of a positioning reference unit (PRU), comprising:
obtaining, by a first network function, PRU information; and
storing, by the first network function, the PRU information.

14. The method according to claim 13, wherein the PRU information comprises at least one of the following:
first PRU information provided by an AMF;
second PRU information obtained by locating the PRU by a first LMF;
third PRU information transmitted by a second LMF;
fourth PRU message transmitted by the PRU.

15. The method according to claim 13, wherein the obtaining the PRU information comprises:
receiving a second request message transmitted by the first LMF, wherein the second request message comprises the PRU information.

16. The method according to claim 13, further comprising:
receiving a third request message transmitted by the first LMF; and
transmitting a first response message to the first LMF, wherein the first response message comprises the PRU information.

17. The method according to claim 13, further comprising:
receiving a fifth request message transmitted by a first LMF;
transmitting a sixth request message to a second LMF;
receiving a fourth response message transmitted by the second LMF, wherein the fourth response message comprises measurement information and/or location information of the PRU; and
transmitting a third response message to the first LMF according to the fourth response message, wherein the third response message comprises the measurement information and/or the location information of the PRU.

18. The method according to claim 13, wherein the PRU information comprises at least one of the following:
an identity of the PRU, a serving area of the PRU, information of a serving AMF of the PRU, a serving cell of the PRU, a power of the PRU, a load of the PRU, a status of the PRU, LCS correlation identity, information of a serving LMF of the PRU, location information of the PRU, measurement information of the PRU.

19. A method for registering information of a positioning reference unit (PRU), comprising: transmitting, by the PRU, PRU information.

20. The method according to claim 19, wherein the transmitting, by the PRU, the PRU information comprises at least one of the following:
transmitting the PRU information to a first LMF; and
transmitting the PRU information to a first network function.

21. The method according to claim 20, wherein the transmitting the PRU information to the first network function comprises:
transmitting the PRU information to the first network function through an AMF; or, transmitting the PRU information to the first network function through an AMF and the first LMF.

22. A communication device, comprising: a memory, a transceiver and a processor, wherein:
the memory is configured to store a computer program; the transceiver is configured to transmit and receive data under the control of the processor; the processor is configured to read the computer program from the memory and perform the following operations:
obtaining positioning reference unit (PRU) information; and
performing first processing according to the PRU information, wherein the first processing comprises at least one of the following:
storing the PRU information;
transmitting the PRU information to a first network function;
determining location information of a UE according to the PRU information.

23. The communication device according to claim 22, wherein the PRU information comprises PRU information about another LMF in addition to the first LMF.

24. The communication device according to claim 22, wherein the processor is configured to read the computer program from the memory and perform at least one of the following operations:
receiving first PRU information transmitted by an AMF;
performing positioning on the PRU to obtain second PRU information;
receiving third PRU information transmitted by a second LMF;
receiving fourth PRU information transmitted by the PRU.

25. The communication device according to claim 24, wherein the processor is configured to read the computer program from the memory and perform the following operations:
receiving a first request message transmitted by the AMF, wherein the first request message comprises PRU indication information; and
performing positioning on the PRU based on the PRU indication information to obtain the second PRU information.

26. The communication device according to claim 22, wherein the transceiver is configured to perform at least one of the following operations:
transmitting the PRU information to a target network function;
transmitting the PRU information to a second LMF.

27. The communication device according to claim 26, wherein the transceiver is specifically configured to:
transmit a second request message to the target network function, wherein the second request message comprises the PRU information.

28. The communication device according to claim 22, wherein the processor is configured to read the computer program from the memory and perform the following operations:
determining measurement information and/or location information of the PRU according to the PRU information; and
determining the location information of the UE based on the measurement information and/or the location information of the PRU.

29. The communication device according to claim 28, wherein the transceiver is further configured to:
transmit a third request message to the first network function; and
receive a first response message transmitted by the first network function, wherein the first response message comprises the PRU information.

30. The communication device according to claim 28, wherein the processor is configured to read the computer program from the memory and perform one of the following operations:
performing positioning on the PRU according to the PRU information to determine the measurement information and/or the location information of the PRU;
determining the measurement information and/or the location information of the PRU through a second LMF;
determining the measurement and/or the location information of the PRU through the first network function.

31. The communication device according to claim 30, wherein the transceiver is further configured to:
transmit a fourth request message to the second LMF; and
receive a second response message transmitted by the second LMF, wherein the second response message comprises the measurement information and/or the location information of the PRU.

32. The communication device according to claim 30, wherein the transceiver is further configured to:
transmit a fifth request message to the first network function; and
receive a third response message transmitted by the first network function, wherein the third response message comprises the measurement information and/or the location information of the PRU.

33. The communication device according to claim 22, wherein the PRU information comprises at least one of the following:
an identity of the PRU, a serving area of the PRU, information of a serving AMF of the PRU, a serving cell of the PRU, a power of the PRU, a load of the PRU, a status of the PRU, LCS correlation identity, information of a serving LMF of the PRU, location information of the PRU, measurement information of the PRU.

34. A communication device, comprising: a memory, a transceiver and a processor, wherein:
the memory is configured to store a computer program; the transceiver is configured to transmit and receive data under the control of the processor; the processor is configured to read the computer program from the memory and perform the following operations:
obtaining PRU information; and
storing the PRU information.

35. The communication device according to claim 34, wherein the PRU information comprises at least one of the following:
first PRU information provided by an AMF;
second PRU information obtained by locating the PRU by a first LMF;
third PRU information transmitted by a second LMF;
fourth PRU message transmitted by the PRU.

36. The communication device according to claim 34, wherein the transceiver is configured to:
receive a second request message transmitted by the first LMF, wherein the second request message comprises the PRU information.

37. The communication device according to claim 34, wherein the transceiver is further configured to:
receive a third request message transmitted by the first LMF; and
transmit a first response message to the first LMF, wherein the first response message comprises the PRU information.

38. The communication device according to claim 34, wherein the transceiver is further configured to:
receive a fifth request message transmitted by a first LMF;
transmit a sixth request message to a second LMF;
receive a fourth response message transmitted by the second LMF, wherein the fourth response message comprises measurement information and/or location information of the PRU; and
transmit a third response message to the first LMF according to the fourth response message, wherein the third response message comprises the measurement information and/or the location information of the PRU.

39. A communication device, comprising: a memory, a transceiver and a processor, wherein:
the memory is configured to store a computer program; the transceiver is configured to transmit and receive data under the control of the processor; the processor is configured to read the computer program from the memory and perform the following operations: transmitting PRU information.

40. The communication device according to claim 39, wherein the transceiver is specifically configured to perform at least one of the following operations:
transmitting the PRU information to a first LMF; and
transmitting the PRU information to a first network function.

41. The communication device according to claim 40, wherein the transceiver is specifically configured to:
transmit the PRU information to the first network function through an AMF; or, transmit the PRU information to the first network function through an AMF and the first LMF.

42. A device for obtaining information of a positioning reference unit, comprising:
a first obtaining unit, configured to obtain positioning reference unit (PRU) information; and
a first processing unit, configured to perform first processing according to the PRU information,
wherein the first processing comprises at least one of the following:
storing the PRU information;
transmitting the PRU information to a first network function;
determining location information of a UE according to the PRU information.

43. A device for obtaining information of a positioning reference unit, comprising:
a second obtaining unit, configured to obtain PRU information; and
a first storage unit, configured to store the PRU information.

44. A device for registering information of a positioning reference unit, comprising:
a first transmitting unit, configured to transmit PRU information.

45. A processor readable storage medium, storing a computer program, wherein the computer program, when executed, causes a processor to implement steps of the method for obtaining information of the PRU according to any one of claims 1 to 12, or to implement steps of the method for obtaining information of the PRU according to any one of claims 13 to 18, or to implement steps of the method for registering information of the PRU according to any one of claims 19 to 21.
